# EUROPÄISCHE PATENTSCHRIFT

(11) **EP 3 891 383 B1**
(45) Veröffentlichungstag und Bekanntmachung des Hinweises auf die Patenterteilung: **11.02.2026**
(21) Anmeldenummer: 19816283.6
(22) Anmeldetag: 04.12.2019
(51) Int. Cl.: F03D 1/06

(54) **ROTOR FÜR EINE WINDENERGIEANLAGE UND VERFAHREN**
ROTOR FOR A WIND TURBINE, AND METHOD
ROTOR POUR ÉOLIENNE ET PROCÉDÉ

(30) Priorität: 04.12.2018 DE 102018130895
(43) Veröffentlichungstag der Anmeldung: 13.10.2021
(73) Patentinhaber: Wobben Properties GmbH, 26607 Aurich (DE)
(72) Erfinder: RUBNER, Florian, 26607 Aurich (DE); JEPSEN, Torsten, 26603 Aurich (DE)
(74) Vertreter: Eisenführ Speiser
(86) Internationale Anmeldenummer: PCT/EP2019/083593
(87) Internationale Veröffentlichungsnummer: WO 2020/115092

(56) Entgegenhaltungen:
- EP-A1- 2 952 739
- WO-A1-03/019004
- WO-A1-2014/076183
- WO-A2-2010/067082
- DE-A1- 102006 022 279
- GB-A- 2 509 082
- JP-A- 2016 031 043
- US-A1- 2010 122 442
- US-A1- 2013 216 394

## Beschreibung

Die Erfindung betrifft einen Rotor für eine Windenergieanlage, ein Rotorblatt für eine Windenergieanlage, ein Blattbefestigungselement zur Befestigung eines Rotorblatts, eine Windenergieanlage und ein Verfahren zur Montage eines Rotors.

Windenergieanlagen der eingangs genannten Art sind hinlänglich bekannt. Der derzeit gängigste Typ einer Windenergieanlage ist die sogenannte Horizontalachsen-Windenergieanlage, die üblicherweise mit drei Rotorblättern ausgestattet ist, wobei auch Windenergieanlagen mit einem, zwei, vier oder mehr Rotorblättern möglich sind. Windenergieanlagen weisen zunehmend größere Bauformen auf, um einerseits eine höhere Nennleistung erreichen zu können und andererseits eine bessere Ausnutzung des Windes zu ermöglichen.

Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst neben dem mindestens einen Rotorblatt eine Nabe, an der das mindestens eine Rotorblatt angeordnet ist. Vorzugsweise ist das mindestens eine Rotorblatt drehbar an der Nabe angeordnet, um eine Pitchwinkelverstellung realisieren zu können. Neben der statischen Last aufgrund des Eigengewichts der Rotorblätter ist bekannt, dass durch entstehende Fliehkräfte bei der Rotation des Rotors hohe Lasten an der Verbindungsstelle zwischen dem Rotorblatt und der Nabe auftreten.

Aufgrund dieser hohen statischen und dynamischen Kräfte ist die Verbindungsstelle zwischen Nabe und Rotorblatt mit einer hohen Festigkeit auszugestalten. Darüber hinaus werden an dieser Verbindungsstelle in der Regel hohe Sicherheitsfaktoren berücksichtigt, um den Abbruch eines Rotorblatts von der Nabe möglichst auszuschließen. Ein Abbruch eines Rotorblatts führt einerseits zu Beschädigungen an der Windenergieanlage selbst, kann jedoch darüber hinaus erheblichen weiteren Schaden im Umfeld der Windenergieanlage verursachen. Durch die zunehmend größeren Bauformen von Windenergieanlagen werden die Verbindungsstellen zwischen Rotorblatt und Nabe massiver ausgeführt, sodass das Gewicht des Rotors aufgrund dieser Verbindungsstelle deutlich zunimmt. Möglichkeiten zur Gestaltung der Verbindungsstelle zwischen einer Nabe und einem Rotorblatt werden beispielsweise in der DE 197 33 372 C1 oder der DE 103 24 166 A1 gezeigt.

Das zunehmende Gewicht des Rotors resultiert in verschiedenen Nachteilen. Die schwereren Rotoren führen zu größeren Kräften und/oder Momenten an der Windenergieanlage. Durch diese größeren Kräfte und/oder Momente werden einerseits die Hauptkomponenten der Windenergieanlage, beispielsweise der Antriebsstrang, größer bzw. belastbarer dimensioniert, und andererseits werden auch weitere Komponenten wie beispielsweise Befestigungselemente größer bzw. belastbarer dimensioniert. Dadurch hat das höhere Gewicht des Rotors ebenfalls Einfluss auf benachbarte Komponenten der Windenergieanlage, die dadurch teurer und ebenfalls schwerer ausgebildet werden.

Insgesamt führt ein schwererer Rotor zu einer insgesamt deutlich schwereren Gondel für eine Windenergieanlage. Darüber hinaus muss gegebenenfalls auch der Turm stabiler ausgeführt werden, um eine derartig schwere Gondel mit schwerem Rotor tragen zu können. Darüber hinaus ist die Montage eines schweren Rotors und/oder einer schweren Gondel erschwert, so dass die Positionierung der Komponenten schwieriger ist und gegebenenfalls größere Kräne notwendig sind. Die im Stand der Technik bekannten Rotoren und Verfahren zum Betrieb und zur Montage solcher Rotoren bieten zwar verschiedene Vorteile, jedoch sind weitere Verbesserungen wünschenswert.

Das Deutsche Patent- und Markenamt hat in der Prioritätsanmeldung zu vorliegender Anmeldung folgenden Stand der Technik recherchiert: WO 2003/ 019 004 A1, DE 10 2017 004 056 A1, DE 10 2014 206 670 A1, EP 2 806 155 A1, WO 2017/025 640 A1, WO 2014/ 173 447 A1, DE 197 33 372 C1, DE 103 24 166 A1.

US 2013/216394 A1 offenbart eine Anordnungskonfiguration zwischen einem Windkraftanlagenrotorblatt und einer Rotornabe enthält eine Rotornabe mit einem oder mehreren Blattlagern, wobei jedes Blattlager einen äußeren Lagerring und einen inneren Lagerring aufweist. GB 2 509 082 A offenbart ein Turbinenblatt, das zum Anbringen an einem Turbinenelement geeignet ist, wobei das Turbinenblatt einen Wurzelbefestigungsabschnitt aufweist, der ein Ende des Turbinenblatts an dem Turbinenelement befestigt und aus einem faserverstärkten Harzverbundmaterial besteht.

Das Europäische Patentamt hat zu vorliegender Anmeldung folgenden Stand der Technik recherchiert: JP 2016 031043 A und US 2010/122442 A1.

Es ist daher eine Aufgabe der vorliegenden Erfindung, einen Rotor für eine Windenergieanlage, ein Rotorblatt für eine Windenergieanlage, ein Blattbefestigungselement zur Befestigung eines Rotorblatts, eine Windenergieanlage und ein Verfahren zur Montage eines Rotors bereitzustellen, welche einen oder mehrere der genannten Nachteile vermindern oder beseitigen. Insbesondere ist es eine Aufgabe der Erfindung, eine Lösung bereitzustellen, die eine vereinfachte Montage eines Rotors an einer Gondel ermöglicht. Ferner ist es eine Aufgabe der vorliegenden Erfindung, eine Lösung bereitzustellen, die eine erhöhte Ressourceneffizienz und/oder geringere Kosten bereitstellt.

Die eingangs genannte Aufgabe gelöst durch die Gegenstände der Ansprüche 1, 2 und 11-13.

Der Erfindung liegt die Erkenntnis zugrunde, dass ein Teil des Gewichts eines Rotors durch die Verbindungsstelle zwischen dem mindestens einen Rotorblatt und der Nabe bestimmt wird. Um die benötigte Festigkeit an der Verbindungsstelle zwischen Rotorblatt und Nabe zu gewährleisten, ist diese Verbindungsstelle massiv auszugestalten. Durch den erfindungsgemäßen Rotor kann die Verbindungsstelle zwischen Rotorblatt und Nabe leichter und/oder kompakter bei vorzugsweise gleichbleibender oder sogar verbesserter Festigkeit gestaltet werden. Durch die erfindungsgemäße Anordnung wird dieser Querschnitt verschlankt, woraus sich ein optimierter Materialeinsatz ergibt. Durch die Reduzierung des Eigengewichts reduzieren sich auch die zu dimensionierenden Lasten, so dass eine insgesamt kostengünstigere Konstruktion realisiert werden kann. Darüber hinaus wird durch das Spannen der Längsbolzen von Seiten des Rotorblattes aus eine deutliche Vereinfachung des Montageprozesses erzielt, die einerseits den zeitlichen Aufwand bei der Montage reduziert und darüber hinaus auch die Ergonomie während der Montage für einen Monteur verbessert.

Das Rotorblatt erstreckt sich von der Blattspitze zu der Stirnseite. Die Blattspitze ist insbesondere als das Ende des Rotorblatts zu verstehen, das im montierten Zustand der Nabe abgewandt ist. Die Stirnseite ist das Ende des Rotorblattes, das der Blattspitze gegenüberliegend angeordnet ist und der Nabe zugewandt ist.

Die Nabe weist das Blattbefestigungselement auf, wobei das Blattbefestigungselement beispielsweise als separates Bauteil an der Nabe angeordnet ist, beispielsweise verschraubt oder verschweißt ist, oder ein integraler Bestandteil der Nabe ist. Das Blattbefestigungselement kann beispielsweise als Blattadapter und/oder Blattlager ausgebildet sein. Das Blattbefestigungselement weist vorzugsweise eine Rotorblattseite auf, die im montierten Zustand dem an diesem zu montierenden Rotorblatt zugewandt ist. An der Rotorblattseite des Blattbefestigungselements ist vorzugsweise das Sackloch zur Aufnahme des Längsbolzens zur Befestigung des Rotorblatts an dem Blattbefestigungselement angeordnet. Das Sackloch weist vorzugsweise ein Innengewinde auf, sodass der Längsbolzen mit einem korrespondierenden Außengewinde innerhalb des Sacklochs verschraubt werden kann. Darüber hinaus sind auch weitere Befestigungsmöglichkeiten zwischen dem Sackloch und dem Längsbolzen möglich. Insbesondere ist es bevorzugt, dass der Längsbolzen kraft- und/oder formschlüssig an dem Sackloch angeordnet ist. Vorzugsweise ist der Längsbolzen mittels eines Querbolzens in dem Sackloch befestigt. Darüber hinaus kann es bevorzugt sein, dass der Längsbolzen mittels einer Schwalbenschwanzverbindung an dem Sackloch befestigt ist.

An der Stirnseite des Rotorblatts ist der Befestigungsbereich angeordnet. Der Befestigungsbereich ist vorzugsweise ein Teil eines Wurzelbereichs des Rotorblatts oder bildet diesen aus. Der Befestigungsbereich weist vorzugsweise einen Querschnitt auf, dessen Flächennormale im Wesentlichen parallel zur Längsachse des Rotorblatts ausgerichtet ist. Dieser Querschnitt hat vorzugsweise eine kreisrunde Geometrie. Ferner vorzugsweise kann dieser Querschnitt auch eine halbrunde und/oder elliptische und/oder eckige und/oder polygonale Geometrie aufweisen. Der Befestigungsbereich bildet ferner eine Außenumfangsfläche und eine Innenumfangsfläche aus. Erfindungsgemäß ist an der Außenumfangsfläche und/oder an der Innenumfangsfläche ein Verdickungsabschnitt angeordnet. Der oder die Verdickungsabschnitte sind insbesondere als Ergänzung zu einer vorhandenen Wandung des Befestigungsbereichs zu verstehen. Die Verdickungsabschnitte verdicken vorzugsweise diese Wandung insbesondere in radialer Richtung. Der Verdickungsabschnitt muss jedoch nicht notwendigerweise als ein separates Bauteil ausgebildet sein, das an der Wandung des Rotorblatts angeordnet wird. Der Verdickungsabschnitt und die Wandung können auch integral gestaltet sein. Der Verdickungsabschnitt ist somit insbesondere als der Bereich des

Befestigungsbereichs zu verstehen, der relativ zur sonstigen Wandung des Rotorblatts verdickt ist.

Durch den mindestens einen Verdickungsabschnitt erstreckt sich die als Durchgangsöffnung ausgebildete Längsbolzenausnehmung mit zwei gegenüberliegenden Enden. Als Durchgangsöffnung ist insbesondere eine Öffnung zu verstehen, die mindestens eine erste Eintrittsöffnung und eine zweite Eintrittsöffnung aufweist, wobei die erste und die zweite Eintrittsöffnung über einen Durchgang miteinander verbunden sind. Die Durchgangsöffnung ist insbesondere im Gegensatz zu einem Sackloch zu verstehen, welches in der Regel lediglich eine Eintrittsöffnung aufweist und an dem der Öffnung gegenüberliegenden Ende ein geschlossenes bzw. abschließendes Ende aufweist. Die sich durch den Verdickungsabschnitt erstreckende Durchgangsöffnung weist vorzugsweise an ihrem ersten Ende eine Eintrittsöffnung auf und eine weitere Eintrittsöffnung an dem dem ersten Ende gegenüberliegenden zweiten Ende.

Vorzugsweise erstreckt sich die Längsbolzenausnehmung ausschließlich durch den Verdickungsabschnitt, wobei eine Längsbolzenachse ferner vorzugsweise im Wesentlichen parallel zu der Durchtrittsrichtung des Befestigungsbereiches ausgerichtet ist. Alternativ vorzugsweise erstreckt sich die Längsbolzenausnehmung durch den Verdickungsabschnitt und durch weitere benachbarte Bereiche. Das erste Ende der Längsbolzenausnehmung ist an der Stirnseite des Rotorblatts angeordnet. Das erste Ende ist insbesondere derart an der Stirnseite des Rotorblatts angeordnet, dass hier eine Öffnung ausgebildet ist, die einen Eintritt eines Längsbolzens in die Längsbolzenausnehmung ermöglicht.

Zur Befestigung des Rotorblatts an dem Blattbefestigungselement ist ein Längsbolzen in dem Sackloch und in der Längsbolzenausnehmung angeordnet. Vorzugsweise ist der Längsbolzen in dem Sackloch verschraubt. Insbesondere ist der Längsbolzen als Gewindebolzen ausgebildet, der ein Gewinde aufweist und/oder abschnittsweise zwei oder mehrere Gewinde aufweist. Die Längsbolzenausnehmung weist vorzugsweise einen Durchmesser auf, der eine größere Abmessung aufweist als ein Durchmesser des Längsbolzens. Insbesondere ist es bevorzugt, dass der Durchmesser der Längsbolzenausnehmung 5%, und/oder 10%, und/oder 20%, und/oder 30%, und/oder 40%, und/oder 50%, und/oder 75%, und/oder 100% größer ist als der Durchmesser des Längsbolzens. Vorzugsweise ist der Längsbolzen auf Seiten der Längsbolzenausnehmung mit einer Mutter und/oder einer Dehnhülse gesichert.

Durch den erfindungsgemäßen Rotor kann die Verbindungsstelle zwischen der Nabe und dem Rotorblatt deutlich kompakter ausgebildet werden. Insbesondere durch die Anordnung von Sacklöchern in dem Blattbefestigungselement ist es zur Befestigung des Rotorblatts nicht erforderlich Durchgangslöcher durch das Blattbefestigungselement anzuordnen. Durch die im Stand der Technik bekannten Durchgangslöcher im Blattbefestigungselement sind die Blattbefestigungselemente an sich breiter auszubilden. Dies liegt insbesondere daran, dass die Durchgangslöcher seitlich an Wälzkörpern vorbeizuführen sind. Durch die Anordnung der Sacklöcher kann trotz einer in der Regel anzuordnenden Lagernut eine kompaktere Bauweise ermöglicht werden. Darüber hinaus werden die Festigkeit und somit auch die Tragfähigkeit des Blattbefestigungselements erhöht. Die Durchgangslöcher auf Seiten des Rotorblatts weisen jedoch keine oder zumindest geringe Nachteile auf. Sie bieten gar Vorteile dahingehend, dass die Montage des Rotors vereinfacht wird. Darüber hinaus wird die Wartung des Rotorblatts stark vereinfacht, da nun das Rotorblatt in eine 12-Uhr-Position gefahren werden kann und von vertikal oben die Schrauben kontrolliert werden können.

Ferner ist vorgesehen, dass der Befestigungsbereich auf einer stirnseitenabgewandten Seite des Verdickungsabschnitts einen Verjüngungsabschnitt aufweist, wobei sich der Verjüngungsabschnitt von einem stirnseitenzugewandten Ende zu einem stirnseitenabgewandten Ende hin verjüngt. Der Verjüngungsabschnitt weist vorzugsweise einen Querschnitt auf, dessen Flächenorthogonale parallel zu einer tangentialen Richtung des Befestigungsbereichs ausgerichtet ist. Dieser Querschnitt weist vorzugsweise eine dreieckige Geometrie und/oder eine sektionsweise dreiecksähnliche Geometrie auf. Bei einer dreieckigen Geometrie ist es besonders bevorzugt, dass eine erste Kathete an der Wandung und eine zweite Kathete an dem Verdickungsabschnitt anliegen. Insbesondere ist es bevorzugt, dass die Hypotenuse des Dreiecks eine gerade, und/oder konkave, und/oder konvexe Geometrie aufweist.

Es kann ferner bevorzugt sein, dass der Befestigungsbereich, insbesondere der Verdickungsabschnitt und/oder der Verjüngungsabschnitt, an eine Blattkontur des Rotorblatts angepasst sind. Beispielsweise bei Rotorblättern mit einem S-Schlag-Profil kann eine einseitige Ausgestaltung des Befestigungsbereichs, insbesondere der Verdickungsabschnitts und/oder der Verjüngungsabschnitts, bevorzugt sein.

Ferner ist vorgesehen, dass der Verjüngungsabschnitt eine Befestigungsausnehmung aufweist, die sich von einem ersten Ende zu einem zweiten

Ende erstreckt. Ferner ist es bevorzugt, dass ein zweites Ende der Längsbolzenausnehmung und ein erstes Ende der aneinander angrenzen und/oder ein erstes Ende der Längsbolzenausnehmung und eine Sacklochöffnung des Sacklochs aneinander angrenzen. Die unmittelbare Anordnung der Längsbolzenausnehmung an der Befestigungsausnehmung resultiert insbesondere darin, dass die Längsbolzenausnehmung als Führungsabschnitt für den Längsbolzen ausgebildet sein kann und die Befestigungsausnehmung für die Befestigung des Längsbolzens genutzt werden kann. Es ist darüber hinaus insbesondere bevorzugt, dass die Längsbolzenausnehmung und die Befestigungsausnehmung einen Durchgang ausbilden. Ein Durchgang, der von der Längsbolzenausnehmung und der Befestigungsausnehmung ausgebildet wird, kann zur Hindurchführung des Längsbolzens genutzt werden.

Eine weitere bevorzugte Fortbildung des Rotors zeichnet sich dadurch aus, dass eine Flächennormale eines Öffnungsquerschnitts eines zweiten Endes der Befestigungsausnehmung und eine Flächennormale eines Öffnungsquerschnitts eines ersten Endes der Befestigungsausnehmung einen Winkel einschließen und/oder eine Flächennormale eines Öffnungsquerschnitts eines zweiten Endes der Befestigungsausnehmung und eine Längsachse der Befestigungsausnehmung einen Winkel einschließen. Diese Anordnung entsteht beispielsweise bei einer im Vorherigen beschriebenen dreieckigen Geometrie des Querschnitts des Verjüngungsabschnitts, welcher die Befestigungsausnehmung umfasst.

Es ist ferner bevorzugt, dass ein Durchmesser der Befestigungsausnehmung größer ist als ein Durchmesser der Längsbolzenausnehmung. Insbesondere ist es bevorzugt, dass die Längsbolzenausnehmung einen Längsausnehmungsquerschnitt aufweist, dessen Flächennormale im Wesentlichen orthogonal zu einer Längsausnehmungsachse ausgerichtet ist und/oder die Befestigungsausnehmung eine Befestigungsausnehmungsquerschnitt aufweist, dessen Flächennormale im Wesentlichen orthogonal zu einer Befestigungsausnehmungsachse ausgerichtet ist, wobei eine Erstreckung, insbesondere ein Durchmesser, des Befestigungsausnehmungsquerschnitts größer ist als eine Erstreckung, insbesondere ein Durchmesser, des Längsausnehmungsquerschnitts, wobei die Erstreckung, insbesondere der Durchmesser, des Befestigungsausnehmungsquerschnitts vorzugsweise mehr als 5 % und/oder 10 % und/oder 20 % und/oder 30 % und/oder 40 % und/oder 50 % und/oder 75 % und/oder 100 % und/oder 200 % und/oder 300 % größer ist als die Erstreckung, insbesondere der Durchmesser, des Längsausnehmungsquerschnitts. Ferner ist es bevorzugt, dass die Flächennormale des Längsausnehmungsquerschnitts und die Flächennormale des Befestigungsausnehmungsquerschnitts parallel, insbesondere koaxial, angeordnet sind.

Der Längsbolzendurchmesser bestimmt vorzugsweise den Durchmesser der Längsbolzenausnehmung. Vorzugsweise weist der Längsbolzendurchmesser einen geringeren Wert auf als der Durchmesser der Längsbolzenausnehmung. Insbesondere ist der Durchmesser der Längsbolzenausnehmung derart zu bemessen, dass ein Längsbolzen von der Längsbolzenausnehmung geführt wird und durch diese hindurchführbar ist. Der Durchmesser der Befestigungsausnehmung wird insbesondere durch eine Größe eines Befestigungselements für den Längsbolzen, und/oder einer Mutter, und/oder einer Dehnhülse, und/oder eines äußeren Werkzeugdurchmessers bestimmt. Der Durchmesser der Befestigungsausnehmung ist vorzugsweise derart ausgebildet, dass ein Bediener eine Mutter und/oder ein Befestigungselement mittels eines Werkzeugs in die Befestigungsausnehmung einführen kann und dort mit dem Längsbolzen verbinden kann. Insbesondere ist es bevorzugt, dass die Erstreckung, insbesondere der Durchmesser, des Befestigungsausnehmungsquerschnitts derart ausgebildet ist, dass ein Befestigungswerkzeug in die Befestigungsausnehmung einführbar ist. Das Werkzeug kann beispielsweise ein Schraubenschlüssel, und/oder ein Steckschlüssel, und/oder ein Rohrschlüssel und/oder einer Drehmomentschlüssel und/oder ein Spannzylinder, und/oder ein drehwinkelgesteuertes Anzugsverfahren sein.

Gemäß einer weiteren bevorzugten Ausführungsvariante des Rotors ist vorgesehen, dass die Befestigungsausnehmung, insbesondere ein Durchmesser der Befestigungsausnehmung, angeordnet und ausgebildet ist zur Aufnahme eines Gegenstücks, insbesondere einer Mutter, zur Verbindung mit dem Längsbolzen und/oder einer Zwischenstücks, z.B. einer Unterlegscheibe. Darüber hinaus kann es vorteilhaft sein, dass die Befestigungsausnehmung, insbesondere ein Durchmesser der Befestigungsausnehmung, angeordnet und ausgebildet ist zur Aufnahme eines Werkzeugabschnitts zur Handhabung eines Gegenstücks, insbesondere einer Mutter, zur Verbindung mit dem Längsbolzen.

In einer bevorzugten Fortbildung des Rotors ist vorgesehen, dass der Verdickungsabschnitt und vorzugsweise der Verjüngungsabschnitt ringförmig ausgebildet ist bzw. sind. Der ringförmig ausgebildete Verdickungsabschnitt weist vorzugsweise eine Durchtrittsrichtung auf, die im Wesentlichen parallel und ferner vorzugsweise koaxial zur Durchtrittsrichtung des Befestigungsbereichs ausgerichtet ist. Der ringförmige Verdickungsabschnitt kann eine konische, kegelförmige, kegelstumpfförmige, und/oder zylinderförmige Ausgestaltung aufweisen oder einen oder mehrere konische, kegelförmige, kegelstumpfförmige, und/oder zylinderförmige Abschnitte aufweisen. Der ringförmige Verdickungsabschnitt kann, vorzugsweise in einer Ebene orthogonal zur Durchtrittsrichtung, einen Querschnitt und/oder Außenumfang aufweisen, der kreisförmig, elliptisch, oval, etc. ist. Der ringförmige Verdickungsabschnitt ist ferner vorzugsweise wie im Vorherigen beschrieben an der Außenumfangsfläche und/oder an der Innenumfangsfläche angeordnet. Darüber hinaus ist der ringförmig ausgebildete Verjüngungsabschnitt ebenfalls durch eine Durchtrittsrichtung, die im Wesentlichen parallel und ferner vorzugsweise koaxial zur Durchtrittsrichtung des Befestigungsbereichs und/oder Verdickungsabschnitts ausgerichtet ist, gekennzeichnet.

Gemäß einer weiteren bevorzugten Ausführungsvariante des Rotors ist vorgesehen, dass das Blattbefestigungselement an einer der Rotorblattseite abgewandten Lagerseite eine Lagernut aufweist mit einer Nutbreite, einer Nutbodenfläche, einer äußeren Nutseitenfläche und einer inneren Nutseitenfläche sowie einer Nutöffnung. Die Lagernut weist vorzugsweise mindestens eine Rille auf, in der Wälzkörper sich bewegen können. Darüber hinaus ist es bevorzugt, dass der Nutboden von einem Sacklochboden in axialer Richtung beabstandet ist, und/oder ein radialer Abstand zwischen der äußeren Nutseitenfläche und einer Sacklochachse kleiner ist als ein zweifacher Sacklochdurchmesser, und/oder ein radialer Abstand zwischen der inneren Nutseitenfläche und einer Sacklochachse kleiner ist als ein zweifacher Sacklochdurchmesser, und/oder eine Sachlocklängsachse den Nutboden schneidet. Insbesondere ist es bevorzugt, dass der radiale Abstand zwischen der äußeren Nutseitenfläche und einer Sacklochachse nach radial außen gerichtet gemessen ist. Ferner ist es bevorzugt, dass der radiale Abstand zwischen der inneren Nutseitenfläche und einer Sacklochachse nach radial innen gemessen ist. Darüber hinaus ist es bevorzugt, dass die im Vorherigen genannten radialen Abstände kleiner als ein 1,5-facher und/oder 1,3-facher und/oder 1-facher und/oder 0,75-facher und/oder 0,5-facher Sacklochdurchmesser ausgebildet sind.

Weiterhin kann es bevorzugt sein, dass eine Flächennormale des Nutbodens im Wesentlichen parallel zu einer Sachlochachse, und/oder einer Durchtrittsrichtung des Befestigungsabschnitts, und/oder einer Rotorblattlängsachse ausgerichtet ist. Ferner kann es bevorzugt sein, dass eine Flächennormale der äußeren Nutseitenfläche und/oder der inneren Nutseitenfläche im Wesentlichen parallel zur radialen Richtung ausgerichtet ist.

In einer weiteren bevorzugten Fortbildung des Rotors ist vorgesehen, dass dieser ein äußeres Sackloch umfasst, das der Außenumfangsfläche des Blattbefestigungselements zugewandt ist, und ein inneres Sackloch aufweist, das der Außenumfangsfläche des Blattbefestigungselements abgewandt ist, wobei das äußere Sackloch und das innere Sackloch an der Rotorblattseite angeordnet sind und wobei eine Sacklochachse des äußeren Sacklochs und eine Sacklochachse des inneren Sacklochs in radialer Richtung mit einem Sacklochabstand beabstandet sind. Die Sacklochachsen sind vorzugsweise parallel zu einer Durchtrittsrichtung des Befestigungsbereichs und/oder einer Rotorblattlängsachse ausgerichtete.

Darüber hinaus ist es bevorzugt, dass der Sacklochabstand eine geringere Abmessung aufweist als die Nutbreite, oder der Sacklochabstand der Nutbreite entspricht oder der Sacklochabstand eine größere Abmessung aufweist als die Nutbreite, wobei vorzugsweise der Sacklochabstand maximal 105 % der Nutbreite entspricht. Ferner vorzugsweise ist dieser Abstand kleiner 110 % und/oder kleiner 120 % und/oder kleiner 130 % und/oder kleiner 140 % und/oder kleiner 150 %. Insbesondere ist es bevorzugt, dass die Sacklochachsen in ihrer Verlängerung durch die Lagernut führen und/oder den Nutboden schneiden.

In einer weiteren bevorzugten Ausführungsvariante des Rotors ist vorgesehen, dass dieser eine Dehnhülse mit einer Hülsenaußenumfangsfläche und einer Hülseninnenumfangsfläche umfasst, wobei zumindest abschnittsweise an der Hülseninnenumfangsfläche ein Dehnhülsengewinde angeordnet ist, wobei die Dehnhülse koaxial zur Längsbolzenausnehmung und/oder zur Befestigungsausnehmung mit ihrem der Stirnseite zugewandten Ende an einem Anschlagspunkt, vorzugsweise an einem Querbolzen, angeordnet ist, wobei der Längsbolzen ein zu dem Dehnhülsengewinde korrespondierendes Längsbolzengewinde aufweist und wobei der Längsbolzen mit der Dehnhülse verschraubt ist.

Ferner vorzugsweise ist vorgesehen, dass das Rotorblatt im Befestigungsbereich eine sich im Wesentlichen radial zu einer Durchtrittsrichtung des Befestigungsbereichs erstreckende Querbolzenausnehmung aufweist, in der Querbolzenausnehmung ein Querbolzen mit einer Querbolzenöffnung angeordnet ist, die Querbolzenöffnung einen Teil der Längsbolzenausnehmung bildet und sich der Längsbolzen durch die Querbolzenöffnung erstreckt. Insbesondere ist es bevorzugt, dass die Querbolzenausnehmung und/oder der Querbolzen am Verdickungsabschnitt, insbesondere am stirnseitenabgewandten Ende des Verdickungsabschnitts, angeordnet ist bzw. sind. Ferner ist es bevorzugt, dass die Querbolzenausnehmung und/oder der Querbolzen an den Verjüngungsabschnitt angrenzt bzw. angrenzen und/oder die Querbolzenausnehmung und/oder der Querbolzen am Verjüngungsabschnitt, insbesondere am stirnseitenzugewandten Ende des Verjüngungsabschnitts, angeordnet ist bzw. sind. Ferner ist es bevorzugt, dass der Rotor dahingehend fortgebildet wird, dass die Querbolzenausnehmung und/oder der Querbolzen abschnittsweise am Verdickungsabschnitt und abschnittsweise am Verjüngungsabschnitt angeordnet ist bzw. sind. Insbesondere ist es bevorzugt, dass das Sackloch, die Längsbolzenausnehmung und die Querbolzenöffnung eine gemeinsame Durchtrittsachse aufweisen.

Eine weitere besonders bevorzugte Ausführungsvariante des Rotors sieht vor, dass das mindestens eine Rotorblatt umfasst zwei oder mehrere Verdickungsabschnitte, und/oder zwei oder mehrere, und/oder zwei oder mehrere Längsbolzenausnehmungen, und/oder zwei oder mehrere Befestigungsausnehmungen, und/oder zwei oder mehrere Querbolzenausnehmungen, und/oder zwei oder mehrere, und/oder zwei oder mehrere Dehnhülsen, und/oder das Blattbefestigungselement zwei oder mehrere Sacklöcher umfasst. Es kann ferner mindestens eine Längsbolzenausnehmungen in Form eines Langlochs vorgesehen sein, die angeordnet ist, mindestens zwei Längsbolzen aufzunehmen.

Darüber hinaus ist es bevorzugt, dass die zwei oder mehreren Verdickungsabschnitte, und/oder zwei oder mehreren Verjüngungsabschnitte, und/oder zwei oder mehreren Längsbolzenausnehmungen, und/oder zwei oder mehreren Befestigungsausnehmungen, und/oder zwei oder mehreren Querbolzenausnehmungen, und/oder zwei oder mehreren Querbolzen, und/oder zwei oder mehreren Dehnhülsen entlang eines Umfangs des Befestigungsbereichs, vorzugsweise jeweils äquidistant, angeordnet sind. Die Anordnung kann auch belastungsabhängig gewählt sein, beispielsweise durch eine dichtere Anordnung im hochbelasteten Bereiche eine weniger dichte Anordnung im weniger belasteten Bereich.

Insbesondere ist es bevorzugt, dass der Rotor einen inneren Verdickungsabschnitt und vorzugsweise einen inneren Verjüngungsabschnitt umfasst, der bzw. die an der Innenumfangsfläche angeordnet ist bzw. sind. Ferner ist es bevorzugt, dass der Rotor einen äußeren Verdickungsabschnitt und vorzugsweise einen äußeren Verjüngungsabschnitt umfasst, der bzw. die an der Außenumfangsfläche angeordnet ist bzw. sind. Darüber hinaus kann sich durch den inneren Verdickungsabschnitt eine innere Längsbolzenausnehmung erstrecken und/oder durch den äußeren Verdickungsabschnitt eine äußere Längsbolzenausnehmung erstrecken. Darüber hinaus erstreckt sich vorzugsweise durch den inneren Verjüngungsabschnitt eine innere Befestigungsausnehmung und durch den äußeren Verjüngungsabschnitt eine äußere Befestigungsausnehmung.

Eine weitere bevorzugte Fortbildung des Rotors zeichnet sich dadurch aus, dass das Blattbefestigungselement ein Nabenadapter und/oder ein Blattflanschlager ist.

Gemäß Anspruch 1 wird die eingangs genannte Aufgabe gelöst durch ein Rotorblatt für eine Windenergieanlage, das sich von einer Blattspitze zu einer Stirnseite erstreckt, umfassend einen Befestigungsbereich, der rohrförmig ausgebildet und an die Stirnseite angrenzend angeordnet ist, zur Befestigung des Rotorblatts an einem Blattbefestigungselement einer Rotornabe, wobei an einer Außenumfangsfläche und/oder an einer Innenumfangfläche des Befestigungsbereiches mindestens ein Verdickungsabschnitt angeordnet ist, sich durch den mindestens einen Verdickungsabschnitt eine als Durchgangsöffnung ausgebildete Längsbolzenausnehmung mit zwei gegenüberliegenden Enden erstreckt, wobei ein erstes Ende an der Stirnseite angeordnet ist.

Der Befestigungsbereich weist auf einer stirnseitenabgewandten Seite des Verdickungsabschnitts einen Verjüngungsabschnitt auf, wobei sich der Verjüngungsabschnitt von einem stirnseitenzugewandten Ende zu einem stirnseitenabgewandten Ende hin verjüngt. In einer bevorzugten Fortbildung des Rotorblatts kann vorgesehen sein, dass der Verjüngungsabschnitt eine Befestigungsausnehmung aufweist, die sich von einem ersten Ende zu einem zweiten Ende erstreckt.

Ferner ist es bevorzugt, dass ein zweites Ende der Längsbolzenausnehmung und ein erstes Ende der Befestigungsausnehmung aneinander angrenzen und/oder ein erstes Ende der Längsbolzenausnehmung und eine Sacklochöffnung aneinander angrenzen. Insbesondere ist es bevorzugt, dass die Längsbolzenausnehmung und die Befestigungsausnehmung einen Durchgang ausbilden. In einer weiteren bevorzugten Fortbildung des Rotorblatts ist vorgesehen, dass eine Flächennormale eines Öffnungsquerschnitts eines zweiten Endes der Befestigungsausnehmung, welches der Rotorblattspitze zugewandt ist, und eine Flächennormale eines Öffnungsquerschnitts eines ersten Endes der Befestigungsausnehmung einen Winkel einschließen. Darüber kann das Rotorblatt bevorzugt derart fortgebildet werden, dass eine Flächennormale eines Öffnungsquerschnitts des zweiten Endes der Befestigungsausnehmung und einer Längsachse der Befestigungsausnehmung einen Winkel einschließen.

Ferner ist es bevorzugt, dass ein Durchmesser der Befestigungsausnehmung größer ist als ein Durchmesser der Längsausnehmung. Ferner ist vorzugsweise vorgesehen, dass die Befestigungsausnehmung, insbesondere ein Durchmesser der Befestigungsausnehmung, angeordnet und ausgebildet ist, zur Aufnahme eines Gegenstücks, insbesondere einer Mutter, zur Verbindung mit dem Längsbolzen. Es ist ferner bevorzugt, dass die Befestigungsausnehmung, insbesondere ein Durchmesser der Befestigungsausnehmung, angeordnet und ausgebildet ist, zur Aufnahme eines Werkzeugabschnitts zur Handhabung eines Gegenstücks, insbesondere einer Mutter, zur Verbindung mit dem Längsbolzen. Darüber hinaus kann es bevorzugt sein, dass der Verdickungsabschnitt und vorzugsweise der Verjüngungsabschnitt ringförmig ausgebildet ist bzw. sind.

In einer bevorzugten Ausführungsvariante des Rotorblatts ist vorgesehen, dass das Rotorblatt im Befestigungsbereich eine sich im Wesentlichen radial zu einer Durchtrittsrichtung des Befestigungsbereichs erstreckende Querbolzenausnehmung aufweist, in der Querbolzenausnehmung ein Querbolzen mit einer Querbolzenöffnung angeordnet ist, die Querbolzenöffnung einen Teil der Längsbolzenausnehmung bildet und sich der Längsbolzen durch die Querbolzenöffnung erstreckt. Ferner ist es bevorzugt, dass die Querbolzenausnehmung und/oder der Querbolzen am Verdickungsabschnitt, insbesondere am stirnseitenabgewandten Ende des Verdickungsabschnitts, angeordnet ist bzw. sind. Darüber hinaus kann es bevorzugt sein, dass die Querbolzenausnehmung und/oder der Querbolzen an den Verjüngungsabschnitt angrenzt bzw. angrenzen und/oder die Querbolzenausnehmung und/oder der Querbolzen am Verjüngungsabschnitt, insbesondere am stirnseitenzugewandten Ende des Verjüngungsabschnitts, angeordnet ist bzw. sind. Eine weitere Fortbildung des Rotorblatts sieht vor, dass die Querbolzenausnehmung und/oder der Querbolzen abschnittsweise am Verdickungsabschnitt und abschnittsweise am Verjüngungsabschnitt angeordnet ist bzw. sind. Ferner ist es bevorzugt, dass die Querbolzenausnehmung als Durchgangsloch ausgeführt ist. Alternativ vorzugsweise kann die Querbolzenausnehmung auch als Sackloch ausgeführt sein. Zur Vereinfachung der Montage des Rotorblatts kann es ferner bevorzugt sein, dass die Längsbolzenausnehmung und die Querbolzenöffnung eine gemeinsame Durchtrittsachse aufweisen.

In einer weiteren bevorzugten Ausführungsvariante des Rotorblatts ist vorgesehen, dass dieses zwei oder mehrere Verdickungsabschnitte und/oder zwei oder mehrere Verjüngungsabschnitte und/oder zwei oder mehrere Längsbolzenausnehmungen und/oder zwei oder mehrere Befestigungsausnehmungen und/oder zwei oder mehrere Querbolzenausnehmungen und/oder zwei oder mehrere Querbolzen und/oder zwei oder mehrere Dehnhülsen umfasst. Darüber hinaus kann es bevorzugt sein, dass die zwei oder mehreren Verdickungsabschnitte und/oder zwei oder mehreren Verjüngungsabschnitte und/oder zwei oder mehreren Längsbolzenausnehmungen und/oder zwei oder mehreren Befestigungsausnehmungen und/oder zwei oder mehreren Querbolzenausnehmungen und/oder zwei oder mehreren Querbolzen und/oder zwei oder mehreren Dehnhülsen entlang eines Umfangs des Befestigungsbereichs, vorzugsweise jeweils äquidistant, angeordnet sind.

Gemäß einem weiteren Aspekt der vorliegenden Erfindung wird die eingangs genannte Aufgabe gelöst durch ein Rotorblattsegment nach Anspruch 11.

Dieser Aspekt der Erfindung beruht unter anderem auf der Erkenntnis, dass die hier für die Befestigung eines Rotorblatts an einer Nabe eines Rotors für eine Windenergieanlage gleichermaßen für ein zweiteiliges, insbesondere längsgeteiltes Rotorblatt eingesetzt werden kann. Ein Rotorblatt kann vorzugsweise zwei Rotorblattsegmente umfassen, die jeweils ein Blattende und eine Befestigungsseite aufweisen und an den beiden, zueinander weisenden Befestigungsseiten miteinander befestigt sind. Diese Befestigung und ihre bevorzugten Ausgestaltungen und Fortbildungen kann vorzugweise der hier für die Befestigung eines Rotorblatts an einer Nabe eines Rotors für eine Windenergieanlage und ihren bevorzugten Ausgestaltungen und Fortbildungen entsprechen. Das Ende eines Rotorblattsegments kann beispielsweise eine Blattspitze sein. Das Ende eines Rotorblattsegments kann auch ein nabennahes Ende sein. Ein solches nabennahes Ende eins Rotorblattsegments kann vorzugsweise eine Stirnseite aufweisen, die der für die Befestigung eines Rotorblatts an einer Nabe eines Rotors für eine Windenergieanlage beschriebenen Stirnseite entspricht.

An einer der Rotorblattseite abgewandten Lagerseite ist eine Lagernut angeordnet mit einer Nutbreite, einer Nutbodenfläche, einer äußeren Nutseitenfläche, die einer Außenumfangsfläche des Blattbefestigungselements zugewandt ist, und einer inneren Nutseitenfläche, die einer Innenumfangsfläche des Blattbefestigungselements zugewandt ist, sowie einer Nutöffnung. Ferner ist es bevorzugt, dass der Nutboden von einem Sacklochboden in axialer Richtung beabstandet ist. Ferner vorzugsweise ist ein radialer Abstand zwischen der äußeren Nutseitenfläche und einer Sacklochachse kleiner ist als ein zweifacher Sacklochdurchmesser und/oder ein radialer Abstand zwischen der inneren Nutseitenfläche und einer Sacklochachse ist kleiner als ein zweifacher Sacklochdurchmesser. Darüber hinaus ist bevorzugt, dass eine Sacklochlängsachse den Nutboden schneidet.

Gemäß einer weiteren bevorzugten Ausführungsvariante des Blattbefestigungselements ist vorgesehen, dass dieses eine ringförmige Geometrie aufweist, mit einer tangential ausgerichteten Ringrichtung, einer Dicke parallel zur Längsrichtung des Rotorblatts, die sich von einer Lagerseite, die dem Rotorblatt abgewandt ist, zu einer Rotorblattseite, die dem Rotorblatt zugewandt ist, erstreckt, einer Breite, die orthogonal zur Ringrichtung und orthogonal zur Dicke in radialer Richtung ausgerichtet ist, wobei an der Lagerseite eine in Ringrichtung umlaufende Lagernut angeordnet ist.

Ferner ist es bevorzugt, dass ein Abstand zwischen der äußeren Nutseitenfläche zu der Außenumfangsfläche des Blattbefestigungselements und/oder ein Abstand der inneren Nutseitenfläche zu der Innenumfangsfläche des Blattbefestigungselements eine kleinere Abmessung aufweist als ein Abstand einer Sacklochachse des Sacklochs zu der Außenumfangsfläche des Blattbefestigungselements und/oder zu der Innenumfangsfläche des Blattbefestigungselements. Es ist darüber hinaus bevorzugt, dass die der Rotorblattseite zugewandte Nutbodenfläche von einem der Nabenseite zugewandten Ende des Sacklochs in Richtung der Dicke mit einem Abstand beabstandet ist, wobei der Abstand vorzugsweise kleiner 90 %, und/oder kleiner 80 %, und/oder kleiner 70 %, und/oder kleiner 60 %, und/oder kleiner 50 %, und/oder kleiner 40 %, und/oder kleiner 30 %, und/oder kleiner 20 %, und/oder kleiner 10 %, und/oder kleiner 5 % der Dicke des Blattbefestigungselements ist. Ferner ist es bevorzugt, dass die Nutbreite eine Erstreckung von kleiner 90 %, und/oder kleiner 80 %, und/oder kleiner 70 %, und/oder kleiner 60 %, und/oder kleiner 50 %, und/oder kleiner 40 %, und/oder kleiner 30 %, und/oder kleiner 20 %, und/oder kleiner 10 %, und/oder kleiner 5 % der Breite des Blattbefestigungselements aufweist.

Eine weitere bevorzugte Fortbildung des Blattbefestigungselements zeichnet sich dadurch aus, dass dieses ein äußeres Sackloch umfasst, das der Außenumfangsfläche des Blattbefestigungselements zugewandt ist und ein inneres Sackloch umfasst, das der Außenumfangsfläche des Blattbefestigungselements abgewandt ist, wobei das äußere Sackloch und das innere Sackloch an der Rotorblattseite angeordnet sind und wobei eine Sacklochachse des äußeren Sacklochs und eine Sacklochachse des inneren Sacklochs in radialer Richtung mit einem Sacklochabstand beabstandet sind.

Ferner ist es bevorzugt, dass der Sacklochabstand eine geringere Abmessung aufweist als die Nutbreite oder der Sacklochabstand der Nutbreite entspricht oder der Sacklochabstand eine größere Abmessung aufweist als die Nutbreite, wobei vorzugsweise der Sacklochabstand maximal 105 % der Nutbreite entspricht. Ferner ist es bevorzugt, dass das Blattbefestigungselement zwei oder mehrere Sacklöcher umfasst. In einer weiteren bevorzugten Fortbildung des Blattbefestigungselements ist vorgesehen, dass dieses ein Nabenadapter oder ein Blattflanschlager ist.

Gemäß einem weiteren Aspekt der vorliegenden Erfindung wird die eingangs genannte Aufgabe gelöst durch eine Windenergieanlage nach Anspruch 12.

Gemäß einem weiteren Aspekt der vorliegenden Erfindung wird die eingangs genannte Aufgabe gelöst durch ein Verfahren zur Montage eines Rotors nach Anspruch 13.

Das Anbringen des Gegenstücks wird vorzugsweise mittels eines Werkzeugs durchgeführt. Insbesondere ist es bevorzugt, dass das Gegenstück eine Mutter ist, die mittels eines Werkzeugs auf den Längsbolzen geschraubt wird. Vorzugsweise umfasst das Verfahren den Schritt Befestigung eines aus der Längsbolzenausnehmung ragenden Endes des Längsbolzens im Bereich des Befestigungsabschnitts, vorzugsweise durch Anbringen eines Gegenstücks. Das Gegenstück ist vorzugsweise als Mutter ausgebildet, wobei die Mutter mittels eines Werkzeugs auf den Längsbolzen aufgeschraubt wird. Das Gegenstück kann auch als Dehnhülse, insbesondere als Dehnhülse mit Gewinde, ausgebildet sein. Ferner ist es bevorzugt, dass das Verfahren umfasst den Schritt Anordnen des Querbolzens in dem Befestigungsbereich in einer sich im Wesentlichen radial zur Rotorblattlängsachse erstreckenden Querbolzenausnehmung, und Ausrichten des Querbolzens derart, dass die Querbolzendurchtrittsrichtung der Querbolzenöffnung im Wesentlichen parallel zur Durchtrittsrichtung angeordnet ist. Darüber hinaus kann es bevorzugt sein, dass an dem dem Blattbefestigungselement abgewandten Ende des Längsbolzens eine Dehnhülse angeordnet wird und gegen einen Anschlagspunkt verschraubt wird, wobei der Anschlagspunkt vorzugsweise eine Umfangsfläche des Querbolzens ist.

Das erfindungsgemäße Verfahren und seine möglichen Fortbildungen weisen Merkmale bzw. Verfahrensschritte auf, die sie insbesondere dafür geeignet machen, für einen Rotor und/oder ein Rotorblatt gemäß den im Vorherigen beschriebenen Aspekten und/oder ein Blattbefestigungselement nach dem im Vorherigen beschriebenen Aspekt und ihre jeweiligen Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Rotors verwiesen.

Bevorzugte Ausführungsformen der Erfindung werden beispielhaft anhand der beiliegenden Figuren erläutert. Es zeigen:
- Fig. 1:: eine schematische, dreidimensionale Ansicht einer beispielhaften Ausführungsform einer Windenergieanlage;
- Fig. 2:: eine schematische, zweidimensionale Ansicht eines Ausschnitts eines im Stand der Technik bekannten Rotors;
- Fig. 3:: eine schematische, zweidimensionale Ansicht eines Ausschnitts einer beispielhaften Ausführungsform eines Rotors;
- Fig. 4:: eine schematische, zweidimensionale Teilansicht einer beispielhaften Ausführungsform eines Rotorblatts;
- Fig. 5:: eine schematische, dreidimensionale Teilansicht des Rotorblatts aus Fig. 4;
- Fig. 6:: eine schematische, zweidimensionale Teilansicht einer weiteren beispielhaften Ausführungsform eines Rotorblatts;
- Fig. 7:: eine schematische, dreidimensionale Teilansicht des Rotorblatts aus Fig. 6;
- Fig. 8:: eine schematische, dreidimensionale Ansicht einer beispielhaften Ausführungsform eines Befestigungsbereichs;
- Fig. 9:: eine schematische, dreidimensionale Ansicht des Befestigungsbereichs aus Fig. 8;
- Fig. 10:: eine schematische, dreidimensionale Ansicht einer weiteren beispielhaften Ausführungsform eines Rotors;
- Fig. 11:: eine schematische, dreidimensionale Ansicht einer weiteren beispielhaften Ausführungsform eines Rotors.

In den Figuren sind gleiche oder im Wesentlichen funktionsgleiche bzw. -ähnliche Elemente mit den gleichen Bezugszeichen bezeichnet.

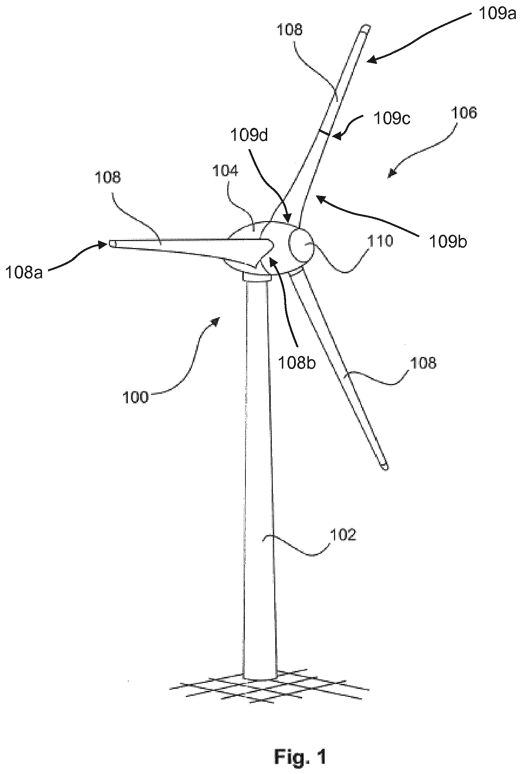

Fig. 1 zeigt eine schematische, dreidimensionale Ansicht einer beispielhaften Ausführungsform einer Windenergieanlage. Fig. 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Mindestens eins der Rotorblätter 108 des Rotors 106 erstreckt sich von einer Blattspitze 108a zu einer Stirnseite 108b, wobei das Rotorblatt 108 einen Befestigungsbereich aufweist, der rohrförmig ausgebildet ist und an die Stirnseite 108b angrenzend angeordnet ist, wobei der Befestigungsbereich an seiner Außenumfangsfläche und/oder an seiner Innenumfangsfläche mindestens einen Verdickungsabschnitt aufweist, wobei sich durch den mindestens einen Verdickungsabschnitt eine als Durchgangsöffnung ausgebildete Längsbolzenausnehmung mit zwei gegenüberliegenden Enden erstreckt, wobei ein erstes Ende der Längsbolzenausnehmung an der Stirnseite 108b des Rotorblatts 108 angeordnet ist. Ferner umfasst der Rotor 106 eine Nabe mit einem Blattbefestigungselement, das an seiner Rotorblattseite ein Sackloch zur Aufnahme eines Längsbolzens zur Befestigung des Rotorblatts 108 an dem Blattbefestigungselement aufweist. Darüber hinaus ist ein Längsbolzen in dem Sackloch und in der Längsbolzenausnehmung zur Befestigung des Rotorblatts an dem Blattbefestigungselement angeordnet.

Alternativ oder zusätzlich kann mindestens eines der Rotorblätter 108 des Rotors 106 als zweigeteiltes, insbesondere wie hier längsgeteiltes, Rotorblatt mit zwei Rotorblattsegmenten 109a, b ausgebildet sein. Das Rotorblattsegment 109a erstreckt sich von einem Blattende, nämlich der Blattspitze, zu einer Befestigungsseite, umfassend einen Befestigungsbereich, der rohrförmig ausgebildet und an die Befestigungsseite angrenzend angeordnet ist, wobei an einer Außenumfangsfläche und/oder an einer Innenumfangfläche des Befestigungsbereiches mindestens ein Verdickungsabschnitt angeordnet ist, sich durch den mindestens einen Verdickungsabschnitt eine als Durchgangsöffnung ausgebildete Längsbolzenausnehmung mit zwei gegenüberliegenden Enden erstreckt, wobei ein erstes Ende an der Befestigungsseite angeordnet ist. Das Rotorblattsegment 109b erstreckt sich von einem Blattende, nämlich dem nabennahen Blattende, zu einer Befestigungsseite, umfassend einen Befestigungsbereich, der rohrförmig ausgebildet und an die Befestigungsseite angrenzend angeordnet ist, wobei an einer Außenumfangsfläche und/oder an einer Innenumfangfläche des Befestigungsbereiches mindestens ein Verdickungsabschnitt angeordnet ist, sich durch den mindestens einen Verdickungsabschnitt eine als Durchgangsöffnung ausgebildete Längsbolzenausnehmung mit zwei gegenüberliegenden Enden erstreckt, wobei ein erstes Ende an der Befestigungsseite angeordnet ist.

Die beiden Rotorblattsegmente 109a, b bilden zusammen ein Rotorblatt. Dazu sind die beiden, zueinander weisenden Befestigungsseiten an der Rotorblatttrennstelle 109c miteinander befestigt.

Das nabennahe Ende des Rotorblattsegments 109b kann vorzugsweise eine Stirnseite 109d aufweisen, die der für die Befestigung eines Rotorblatts an einer Nabe eines Rotors für eine Windenergieanlage beschriebenen Stirnseite 108b entspricht.

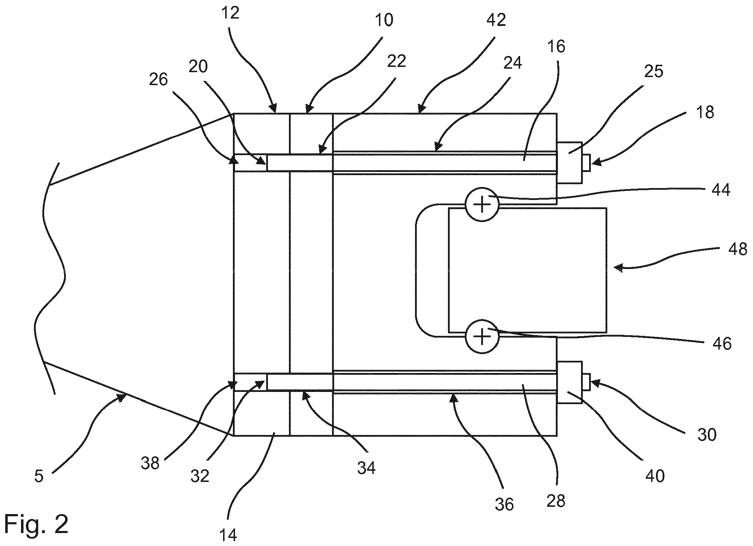

Fig. 2 zeigt eine schematische, zweidimensionale Ansicht eines Ausschnitts eines im Stand der Technik bekannten Rotors. Die Verbindungsstelle zwischen dem Rotorblatt 5 und der Nabe weist auf der Seite des Rotorblatts 5 einen Befestigungsbereich 10 auf. Mit dem Befestigungsbereich 10 grenzt das Rotorblatt 5 an ein U-Lager 42 der Nabe an. Der Befestigungsbereich 10 weist eine äußere rotorblattseitige Längsbolzenausnehmung 22 auf. Darüber hinaus weist der Befestigungsbereich 10 eine Querbolzenausnehmung 12 auf, in der ein Querbolzen 14 angeordnet ist. Der Querbolzen 14 weist ferner eine äußere Querbolzenöffnung 26 auf, die bei entsprechender Anordnung des Querbolzens 14 in der Querbolzenausnehmung 12 fluchtend mit der äußeren rotorblattseitigen Längsbolzenausnehmung 22 angeordnet ist.

Das U-Lager 42 weist eine äußere nabenseitige Längsbolzenausnehmung 24 auf, die bei entsprechender Anordnung des Rotorblatts 5 an dem U-Lager 42 fluchtend mit der äußeren rotorblattseitigen Längsbolzenausnehmung 22 und fluchtend mit der äußeren Querbolzenöffnung 26 ausgerichtet ist. Innerhalb der äußeren Querbolzenöffnung 26, der äußeren rotorblattseitigen Längsbolzenausnehmung 22 und der äußeren nabenseitigen Längsbolzenausnehmung 24 ist ein äußerer Längsbolzen 16 angeordnet. Der Längsbolzen 16 weist an seinem zweiten Ende 20, das dem Rotorblatt zugewandt ist, vorzugsweise ein Gewinde auf. Darüber hinaus weist der Querbolzen 14 in seiner äußeren Querbolzenöffnung 26 vorzugsweise ein Innengewinde auf, das korrespondierend zu dem Außengewinde am Längsbolzen 16 ausgebildet ist, sodass der Längsbolzen 16 in den Querbolzen 12 hineingeschraubt werden kann.

Der Längsbolzen erstreckt sich von einem ersten Ende 18, das der Nabe zugewandt ist, zu dem zweiten Ende 20. Mit dem ersten Ende 18 ragt der Längsbolzen 16 aus der äußeren nabenseitigen Längsbolzenausnehmung 24 heraus. An einem Abschnitt angrenzend an das erste Ende 18 weist der Längsbolzen 16 ein Außengewinde auf. Auf dieses Außengewinde ist eine Mutter 25 geschraubt, sodass mittels der Einschraubung des Längsbolzens 16 in den Querbolzen 12 und mittels des Aufschraubens der Mutter 25 eine Befestigung des Rotorblatts 5 an dem U-Lager 42 erfolgt.

Auf einer inneren Seite des Befestigungsbereichs ist analog zur äußeren Seite eine innere rotorblattseitige Längsbolzenausnehmung 34, eine innere Querbolzenöffnung 38 und eine innere nabenseitige Längsbolzenausnehmung 36 angeordnet. In diesen ist ein innerer Längsbolzen 28 angeordnet, der sich von einem ersten Ende 30 zu einem zweiten Ende 32 in Längsrichtung erstreckt. Die Längsrichtung des Längsbolzens 28 ist im Wesentlichen parallel zu einer Längserstreckung des Rotorblatts 5 und/oder einer Durchtrittsrichtung des Befestigungsbereichs 10. Der Längsbolzen 28 ist in ein Gewinde der inneren Querbolzenöffnung 38 hineingeschraubt und an seinem ersten Ende 30 mittels einer Mutter 40 gesichert. Das U-Lager 42 weist ein Nabenelement 48 auf, das mittels Wälzkörper 44, 46 in einer Nut des U-Lagers 42 gelagert ist.

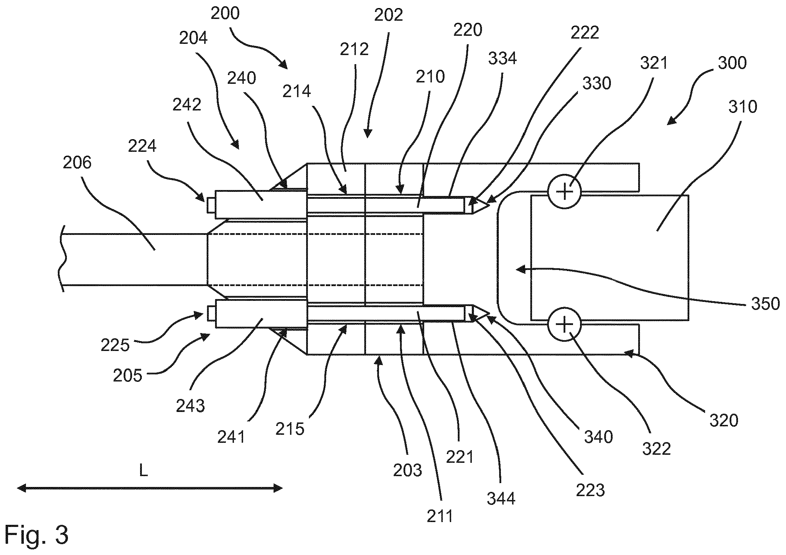

Fig. 3 zeigt eine schematische, zweidimensionale Ansicht eines Ausschnitts einer beispielhaften Ausführungsform eines Rotors. Gezeigt ist der stirnseitig an einem Rotorblatt angeordnete, rohrförmige Befestigungsbereich 200. Der Befestigungsbereich 200 ist stirnseitig an einem Blattbefestigungselement 300 angeordnet. Gezeigt in der Fig. 3 ist insbesondere ein Schnitt durch eine Wandung in radialer Richtung des Befestigungsbereichs 200. Auf der linken Seite der Abbildung ist ferner ein Teil der Rotorblattwandung 206 gezeigt. In dem Befestigungsbereich 200 ist die Wandung verdickt, indem an einer Außenumfangsfläche ein äußerer Verdickungsabschnitt 202 und an einer Innenumfangsfläche ein innerer Verdickungsabschnitt 203 angeordnet ist. Der äußere Verdickungsabschnitt 202 und der innere Verdickungsabschnitt 203 sind integral mit der Rotorblattwandung 206 verbunden. Das Rotorblatt erstreckt sich insbesondere von dem Befestigungsbereich 200 in Längsrichtung L zu einer nicht gezeigten Rotorblattspitze.

Der Befestigungsbereich 200 weist auf einer stirnseitenabgewandten Seite des äußeren Verdickungsabschnitts 202 einen äußeren Verjüngungsabschnitt 204 auf, wobei sich der äußere Verjüngungsabschnitt 204 von einem stirnseitenzugewandten Ende zu einem stirnseitenabgewandten Ende hin verjüngt. Der äußere Verjüngungsabschnitt 204 weist einen Querschnitt auf, dessen Flächennormale parallel zur Ringrichtung und/oder tangentialer Richtung des Befestigungsbereichs 200 angeordnet ist. Der Querschnitt des äußeren Verjüngungsabschnitts 204 ist dreiecksförmig, wobei eine erste Kathete an den Verdickungsabschnitt 202 angrenzt und eine zweite Kathete an die Rotorblattwandung 206 angrenzt. Die Hypotenuse ist als eine Gerade ausgebildet.

An den inneren Verdickungsabschnitt 203 grenzt analog ein innerer Verjüngungsabschnitt 205 an. Die Verjüngungsabschnitte 204, 205 sind integral mit der Rotorblattwandung 206 und den jeweiligen Verdickungsabschnitten 202, 203 verbunden. Durch die dreiecksförmige Geometrie des äußeren Verjüngungsabschnitts 204 schließt eine Flächennormale eines Öffnungsquerschnitts eines zweiten Endes der Befestigungsausnehmung 240, das der Stirnseite abgewandt ist, und eine Flächennormale eines Öffnungsquerschnitts eines ersten Endes der Befestigungsausnehmung 240 einen Winkel ein. Ferner schließt eine Flächennormale eines Öffnungsquerschnitts des zweiten Endes der Befestigungsausnehmung 240 und eine Längsachse der Befestigungsausnehmung 240 einen Winkel ein. Es ist ferner zu erkennen, dass der Durchmesser der Befestigungsausnehmung 240 größer ist als der Durchmesser der Längsbolzenausnehmung 211.

Durch den äußeren Verdickungsabschnitt 202 und inneren Verdickungsabschnitt 203 erstrecken sich jeweils von einem ersten Ende, das stirnseitig angeordnet ist, eine äußere Längsbolzenausnehmung 210 und eine innere Längsbolzenausnehmung 211 jeweils zu einem zweiten Ende, wobei die zweiten Enden der Längsbolzenausnehmung 210, 211 an den Verjüngungsabschnitt 204, 205 angrenzen. Zwischen den Längsbolzenausnehmungen 210, 211 und den Verjüngungsabschnitten 204, 205 ist ferner ein Querbolzen 212 angeordnet. Der Querbolzen 212 weist eine äußere Querbolzenöffnung 214 und eine innere Querbolzenöffnung 215 auf, die sich koaxial zur äußeren Längsbolzenausnehmung 210 bzw. inneren Längsbolzenausnehmung 211 erstrecken. Die äußere Querbolzenöffnung 214 und innere Querbolzenöffnung 215 können als Teil der äußeren Längsbolzenausnehmung 210 bzw. inneren Längsbolzenausnehmung 211 verstanden werden. Das der Nabe abgewandte zweite Ende der äußeren Längsbolzenausnehmung 210 und ein der Nabe zugewandtes erstes Ende der Befestigungsausnehmung 240 grenzen aneinander an.

Wie bereits beschrieben, grenzen die Längsbolzenausnehmungen 210, 211 mit ihren zweiten Enden an die Verjüngungsabschnitte 204, 205. Von dem zweiten Ende der äußeren Längsbolzenausnehmung aus erstreckt sich durch den äußeren Verjüngungsabschnitt 204 eine äußere Befestigungsausnehmung 240 parallel zur Längsrichtung L. Analog erstreckt sich eine innere Befestigungsausnehmung 241 durch die innere Befestigungsausnehmung 241 in Längsrichtung L. Die Befestigungsausnehmungen 240, 241 erstrecken sich vorzugsweise koaxial zu den Längsbolzenausnehmungen 210, 211.

Das Blattbefestigungselement 300 weist ein U-Lager 320 und ein Nabenelement 310 auf. Das Nabenelement 310 ist mittels Wälzkörper 321, 322 innerhalb einer Lagernut 350 des U-Lagers 320 gelagert. Die Lagernut 350 weist zwei Seitenflächen, die der Außenumfangsfläche bzw. der Innenumfangsfläche zugewandt sind, einen Nutboden, der dem Rotorblatt zugewandt ist, und eine offene Seite, die dem Rotorblatt abgewandt ist, auf. Das U-Lager 320 weist eine Rotorblattseite auf, die der Stirnseite des Rotorblatts zugewandt ist.

An der Rotorblattseite weist das U-Lager 320 ein äußeres Sackloch 330 und ein inneres Sackloch 340 auf. Im montierten Zustand ist das äußere Sackloch 330 koaxial zur äußeren Längsbolzenausnehmung 210 angeordnet. Darüber hinaus ist das innere Sackloch 340 koaxial zur inneren Längsbolzenausnehmung 211 angeordnet. Die äußere Längsbolzenausnehmung 211, die äußere Befestigungsausnehmung 240 und das äußere Sackloch 330 bilden einen Durchgang aus und sind koaxial angeordnet. In Längsrichtung L sind die Sacklöcher 330, 340 von der Nut 350 in Richtung des Rotorblattes beabstandet. Darüber hinaus sind die Seitenwände der Nut 350 derart beabstandet, dass deren Abstand größer ist als eine Beabstandung der Sacklöcher 330, 340 zueinander.

Um das Rotorblatt mit seinem Befestigungsbereich 200 an dem Blattbefestigungselement 300 zu befestigen, ist innerhalb des äußeren Sacklochs 330, der äußeren Längsbolzenausnehmung 210 und der äußeren Befestigungsausnehmung 240 ein äußerer Längsbolzen 220 angeordnet. Das erste, der Nabe zugewandte Ende der Längsbolzenausnehmung 210 grenzt an das Sackloch 330 an. Der äußere Längsbolzen 220 erstreckt sich von einem ersten Ende 222 bis zu einem zweiten Ende 224. Der äußere Längsbolzen 220 weist in einem Bereich angrenzend an das erste Ende 222 ein Außengewinde auf, das korrespondierend zu einem Innengewinde 334 des äußeren Sacklochs 330 ausgebildet ist. Der äußere Längsbolzen 220 ist innerhalb des äußeren Sacklochs 330 verschraubt.

Die äußere Befestigungsausnehmung 240, insbesondere ein Durchmesser der Befestigungsausnehmung 240, ist angeordnet und ausgebildet, zur Aufnahme eines Gegenstücks, insbesondere einer Mutter oder einer Dehnhülse 242, zur Verbindung mit dem Längsbolzen 210. Der Längsbolzen 220 weist angrenzend an das zweite Ende 224 ein Außengewinde auf. An einen Abschnitt angrenzend an das zweite Ende 224 ist ferner eine Dehnhülse 242 aufgeschraubt, die mit ihrem dem Blattbefestigungselement 300 zugewandten Ende an dem Querbolzen 212 anliegt. Durch das Anliegen der Dehnhülse 224 an dem Querbolzen 212 und ein Verschrauben der Dehnhülse 224 auf dem Längsbolzen 220 sowie der Verschraubung des Längsbolzens 220 in dem äußeren Sackloch 330 wird eine Kraft in Längsrichtung L auf den Längsbolzen 220 bewirkt. Durch diese Kraft in Längsrichtung L erfolgt eine Verbindung des Befestigungsbereichs 200 mit dem Blattbefestigungselement 300.

Analog zum äußeren Längsbolzen 220 erstreckt sich ein innerer Längsbolzen 221 von dem inneren Sackloch 340 durch die innere Längsbolzenausnehmung 211 bis zu der inneren Befestigungsausnehmung 241. Der Längsbolzen 221 erstreckt von einem ersten Ende 223 im Bereich des Sacklochs zu einem zweiten Ende 225. Der innere Längsbolzen 221 ist analog zum äußeren Längsbolzen 220 mit einem Außengewinde in einem Innengewinde 344 des Sacklochs 340 befestigt. Darüber hinaus ist der Längsbolzen 221 mittels einer Dehnhülse 243 innerhalb der Befestigungsausnehmung 243 gesichert.

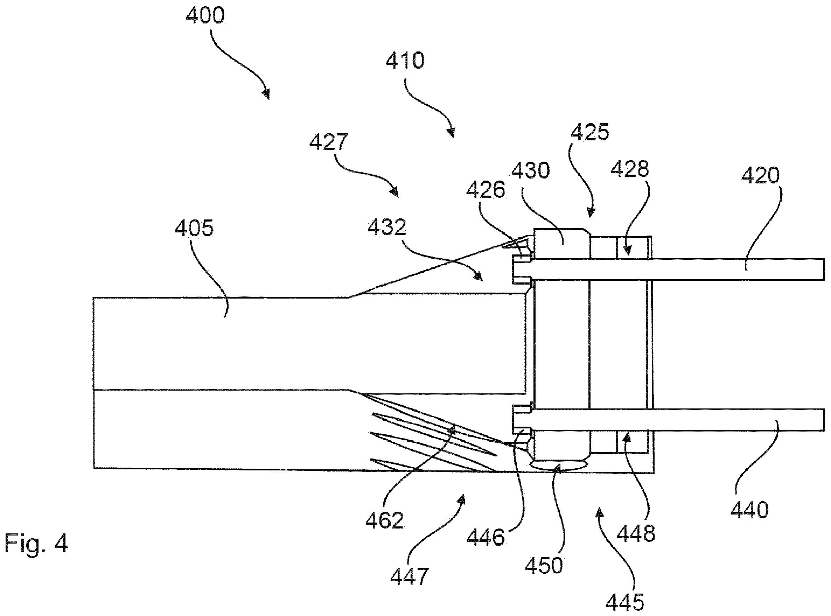

In den Fig. 4 bis 7 wird eine weitere schematische beispielhafte Ausführungsform eines Rotorblatts 400, 400' gezeigt. Das Rotorblatt 400, 400' weist eine Wandung 405 auf, wobei innerhalb eines Befestigungsbereichs 410 ein äußerer Verdickungsabschnitt 425 und ein innerer Verdickungsabschnitt 445 angeordnet ist. Darüber hinaus sind auf den stirnseitenabgewandten Seiten der Verdickungsabschnitte 425, 445 Verjüngungsabschnitte 427, 447 angeordnet. Innerhalb der Verdickungsabschnitte 425, 445 sind radial zur Rotorblattlängsachse Querbolzenausnehmungen 450 angeordnet. Innerhalb der Querbolzenausnehmung 450 sind ferner Querbolzen 430 angeordnet. Im Wesentlichen parallel zur Rotorblattlängsachse sind ferner äußere Längsbolzenausnehmungen 428 und innere Längsbolzenausnehmungen 448 innerhalb des äußeren und inneren Verdickungsabschnitts 425, 445 angeordnet. Innerhalb dieser erstrecken sich ein äußerer Längsbolzen 420 und ein innerer Längsbolzen 440, wobei sich die Längsbolzen 420, 440 bis hin zu einer äußeren Befestigungsausnehmung 432 bzw. einer inneren Befestigungsausnehmung 462 erstrecken. Innerhalb der äußeren Befestigungsausnehmung 432 und inneren Befestigungsausnehmung 462 sind die Längsbolzen mittels einer Mutter 426, 446 gesichert.

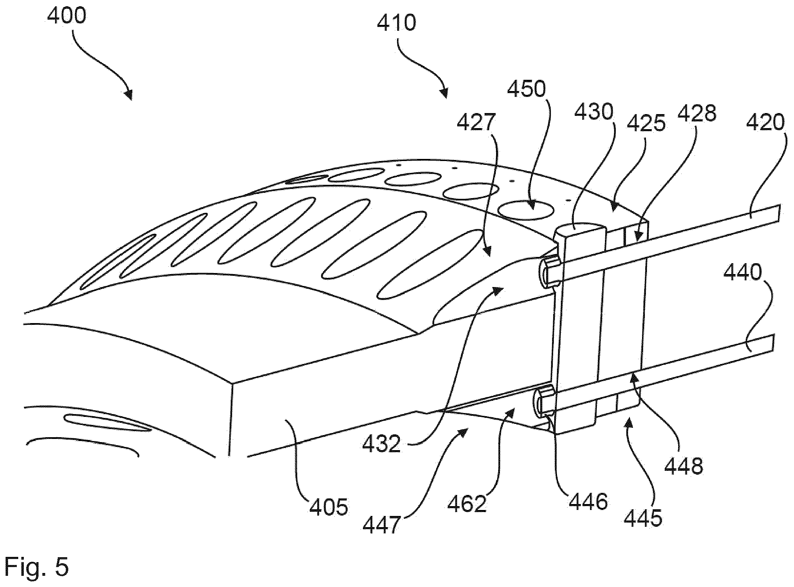

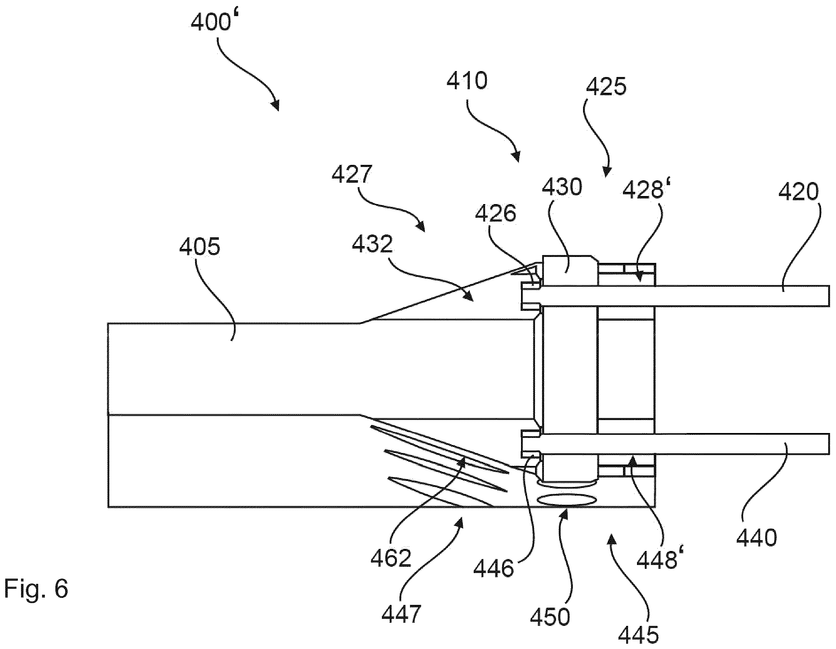

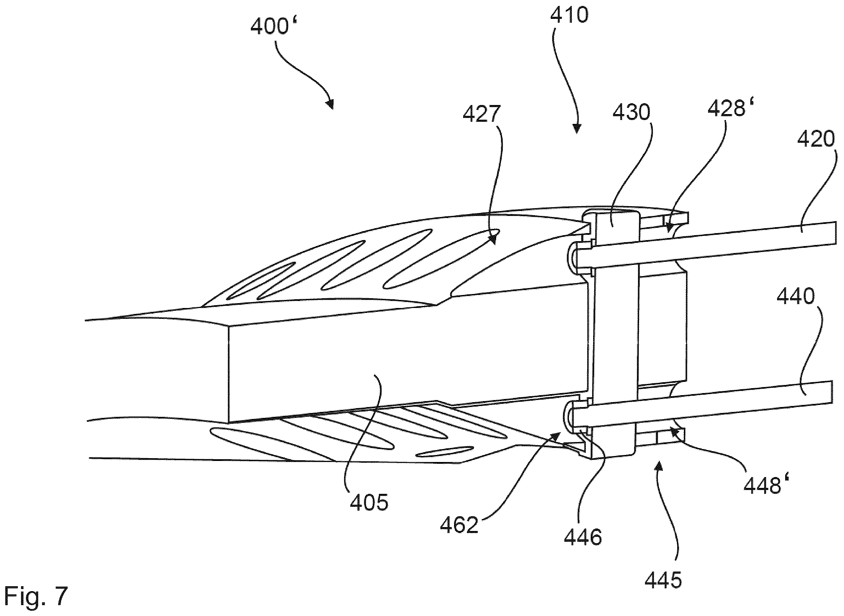

In den Fig. 4 und 5 ist gezeigt, dass die Längsbolzenausnehmungen 428, 448 einen Durchmesser aufweisen, der lediglich geringfügig größer ist als ein Durchmesser der Längsbolzen 420, 440. In den Fig. 6 und 7 sind Längsbolzenausnehmungen 428', 448' gezeigt, die einen Durchmesser aufweisen, der signifikant größer ist als ein Durchmesser der Längsbolzen 420, 440.

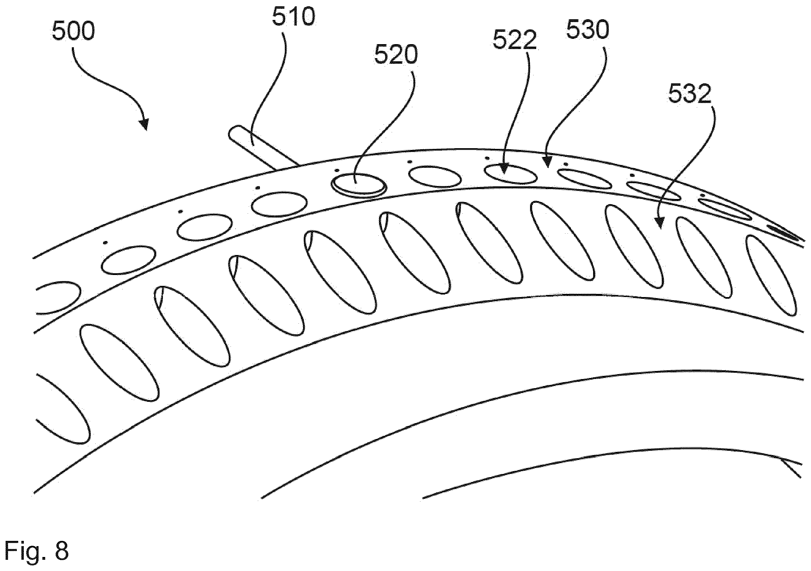

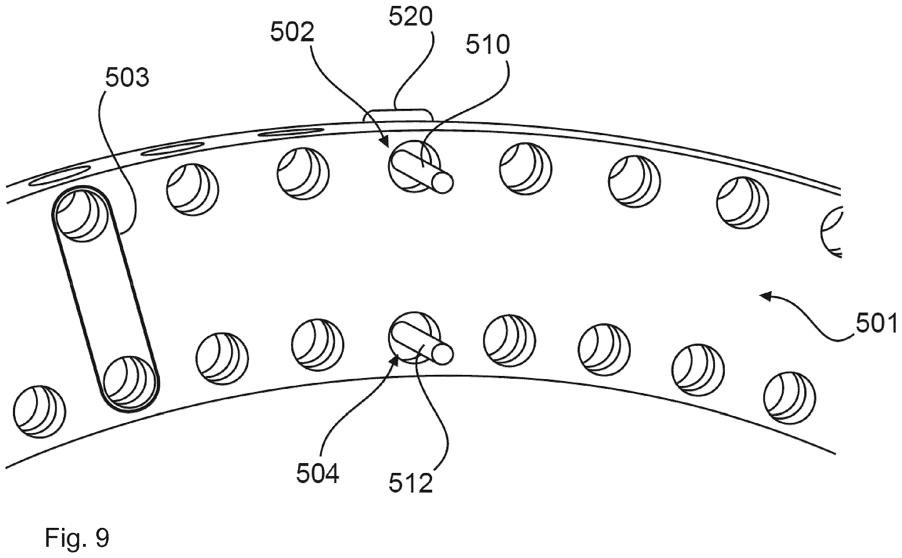

Fig. 8 zeigt eine schematische, dreidimensionale Ansicht einer beispielhaften Ausführungsform eines Befestigungsbereichs. Der Befestigungsbereich 500 wird durch einen Verdickungsabschnitt 530, einen Verjüngungsabschnitt 532 und eine Wandung gebildet. Innerhalb des Verdickungsabschnitts 530 sind radial zur Durchgangsrichtung des Befestigungsbereichs 500 Querbolzenöffnungen 522 angeordnet, in denen Querbolzen 520 anordenbar sind. In dem Querbolzen 520 ist ferner ein Längsbolzen 510 angeordnet. Insbesondere in der Fig. 9 ist ersichtlich, dass die Längsbolzenausnehmungen 502, 504 an die Stirnseite 501 angrenzen. Darüber hinaus ist gezeigt, dass sich die Längsbolzen 510, 512 durch die Längsbolzenausnehmungen 502, 504 erstrecken, aus der Stirnseite 501 herausragen und innerhalb eines Querbolzens 520 angeordnet sind.

In Fig. 9 ist ferner eine Ausgestaltung gezeigt, in der ein Langloch 503 als Längsbolzenausnehmung vorgesehen ist, das angeordnet ist, um beide Längsbolzen 510, 512 aufzunehmen.

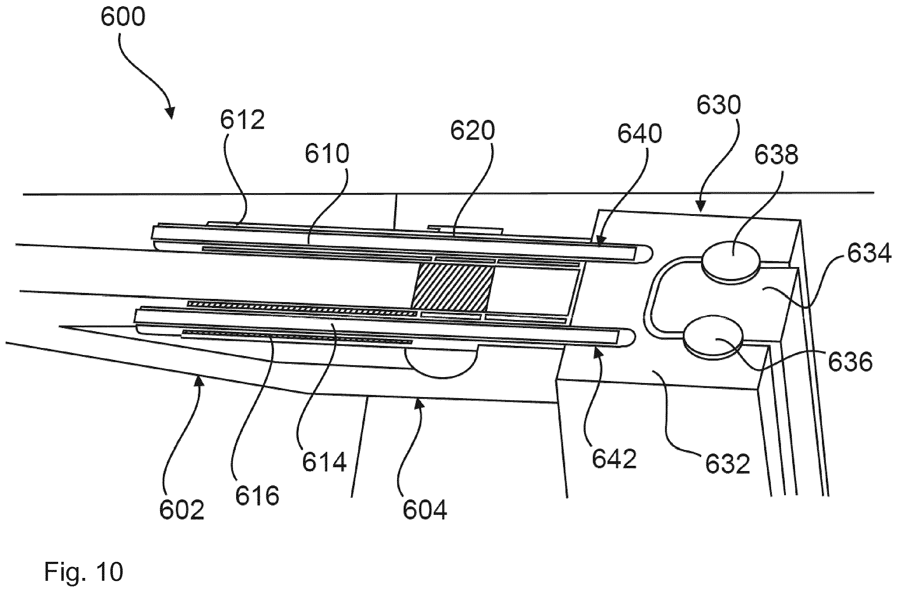

Fig. 10 zeigt eine schematische, dreidimensionale Ansicht einer beispielhaften Ausführungsform eines Rotors. Der Befestigungsbereich 600 eines Rotorblatts umfasst einen inneren Verjüngungsabschnitt 602 und einen inneren Verdickungsabschnitt 604, durch die sich ein innerer Längsbolzen 614 erstreckt. Auf Seiten des Befestigungsbereichs 600 ist der Längsbolzen 614 mittels einer inneren Dehnhülse 616 gesichert. Die Dehnhülse 616 stößt stirnseitig an einen Querbolzen 620. Radialseitig gegenüberliegend von dem inneren Verjüngungsabschnitt 602 und inneren Verdickungsabschnitt 604 ist analog zu den im Vorherigen beschriebenen Ausführungsformen ein nicht gezeigter äußerer Verjüngungsabschnitt und ein nicht gezeigter Verdickungsabschnitt angeordnet, durch die ein äußerer Längsbolzen 610 sich erstreckt, der mittels einer äußeren Dehnhülse 612 gesichert ist, die stirnseitig gegen den Querbolzen 620 anschlägt.

Der Befestigungsbereich 600 dient der Befestigung des Rotorblatts an dem Blattbefestigungselement 630, wobei das Blattbefestigungselement 630 ein U-Lager 632 und ein Nabenelement 634 aufweist, wobei das Nabenelement 634 mittels Wälzkörper 336, 338 in dem U-Lager 632 gelagert ist. Das U-Lager 632 weist ein äußeres Sackloch 640 und ein inneres Sackloch 642 auf, in denen die Längsbolzen 610, 614 eingeschraubt sind. Durch die Einschraubung der Längsbolzen 610, 612 in die Sacklöcher 640, 642 und die Befestigung der Längsbolzen 610, 614 mittels der Dehnhülsen 612, 616 besteht die Möglichkeit einer Verbindung des Rotorblatts mit dem Befestigungsbereich 600 mit dem Blattbefestigungselement 630.

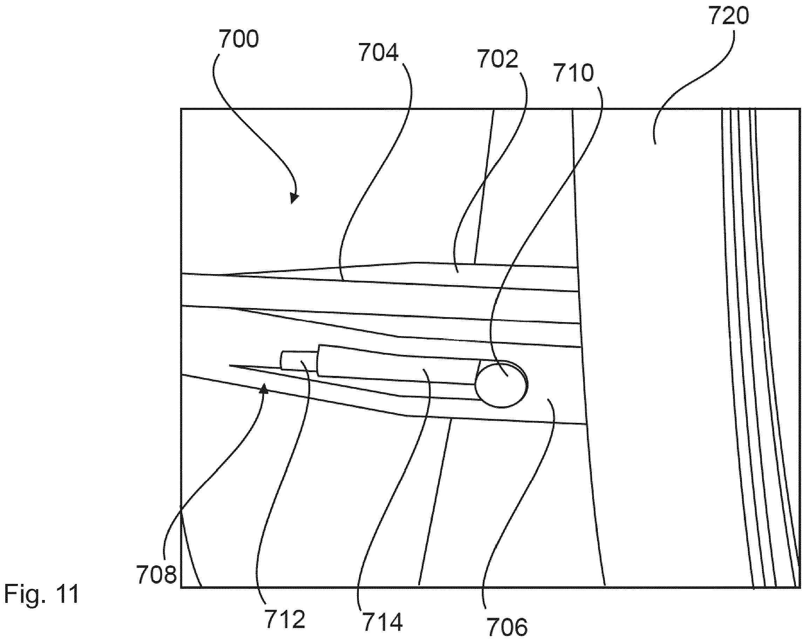

Fig. 11 zeigt eine schematische, dreidimensionale Ansicht einer weiteren beispielhaften Ausführungsform eines Rotors. Der Befestigungsbereich 700 weist einen inneren Verdickungsabschnitt 702, einen inneren Verjüngungsabschnitt 704, einen äußeren Verdickungsabschnitt 706 und einen äußeren Verjüngungsabschnitt 708 auf, wobei sich durch die Verdickungsabschnitte 702 und 706 ein Querbolzen 710 erstreckt. Das den Befestigungsbereich 700 aufweisende Rotorblatt ist an einem Blattbefestigungselement 720 derart gesichert, dass Längsbolzen, wovon hier lediglich der äußere Längsbolzen 712 gezeigt ist, sich durch eine Längsbolzenausnehmung der Verdickungsabschnitte 702, 706 erstrecken und in Sacklöchern des Blattbefestigungselements 720 verschraubt sind. Ferner sind die Längsbolzen auf Seiten des Befestigungsbereichs mit Dehnhülsen 714 gesichert. Vorliegend ist ersichtlich, dass ein Teil der Längsbolzenausnehmung und der Befestigungsausnehmung als Nut und nicht als Bohrung ausgeführt sind.

### BEZUGSZEICHEN

- 5, 108, 400, 400': Rotorblatt
- 10, 200, 410, 500, 600, 700: Befestigungsbereich
- 12, 450, 522: Querbolzenausnehmung
- 14, 212, 430, 520, 620, 710: Querbolzen
- 16, 220, 420, 510, 610, 712: äußerer Längsbolzen
- 18, 30, 222, 223: erstes Ende Längsbolzen
- 20, 32, 224, 225: zweites Ende Längsbolzen
- 22: äußere rotorblattseitige Längsbolzenausnehmung
- 24: äußere nabenseitige Längsbolzenausnehmung
- 25, 40, 426, 446: Mutter
- 26, 214: äußere Querbolzenöffnung
- 28, 221, 440, 512, 614: innerer Längsbolzen
- 34: innere rotorblattseitige Längsbolzenausnehmung
- 36: innere nabenseitige Längsbolzenausnehmung
- 38, 215: innere Querbolzenöffnung
- 42, 320, 632: U-Lager
- 44, 46, 321, 322, 636, 638: Wälzkörper
- 48, 310, 634: Nabenelement
- 100: Windenergieanlage
- 102: Turm
- 104: Gondel
- 106: Rotor
- 108a: Rotorblattspitze
- 108b, 501: Stirnseite
- 109a, b: Rotorblattsegment
- 109c: Rotorblatttrennstelle
- 109d: Befestigungsseite
- 110: Spinner
- 202, 425, 530, 706: äußerer Verdickungsabschnitt
- 203, 445, 604, 702: innerer Verdickungsabschnitt
- 204, 427, 532, 708: äußerer Verjüngungsabschnitt
- 205, 447, 602, 704: innerer Verjüngungsabschnitt
- 206, 405: Rotorblattwandung
- 210, 428, 428', 502: äußere Längsbolzenausnehmung
- 211, 448, 448', 504: innere Längsbolzenausnehmung
- 240, 432: äußere Befestigungsausnehmung
- 241, 462: innere Befestigungsausnehmung
- 242, 243, 612, 616, 714: Dehnhülse
- 300, 630, 720: Blattbefestigungselement
- 330, 640: äußeres Sackloch
- 334, 344: Sacklochgewinde
- 340, 642: inneres Sackloch
- 350: Lagernut
- 503: Langloch
- L: Rotorblattlängsrichtung

## Patentansprüche

1. Rotorblatt (108, 400, 400') für eine Windenergieanlage (100), das sich von einer Blattspitze (108a) zu einer Stirnseite (108b, 501) erstreckt, umfassend einen Befestigungsbereich (200, 410, 500, 600, 700), der rohrförmig ausgebildet und an die Stirnseite angrenzend angeordnet ist, zur Befestigung des Rotorblatts an einem Blattbefestigungselement (300, 630) einer Rotornabe, wobei
- an einer Außenumfangsfläche und/oder an einer Innenumfangfläche des Befestigungsbereiches mindestens ein Verdickungsabschnitt (202, 203, 425, 445, 530, 604, 702, 706) angeordnet ist,
- sich durch den mindestens einen Verdickungsabschnitt eine als Durchgangsöffnung ausgebildete Längsbolzenausnehmung (210, 211, 428, 448, 502, 504) mit zwei gegenüberliegenden Enden erstreckt, wobei ein erstes Ende an der Stirnseite angeordnet ist,
- **dadurch gekennzeichnet, dass** der Befestigungsbereich (200, 410, 500, 600, 700) auf einer stirnseitenabgewandten Seite des Verdickungsabschnitts (202, 203, 425, 445, 530, 604, 702, 706) einen Verjüngungsabschnitt (204, 205, 427, 447, 532, 602, 704 708) aufweist, wobei sich der Verjüngungsabschnitt von einem stirnseitenzugewandten Ende zu einem stirnseitenabgewandten Ende hin verjüngt, und
- **dadurch gekennzeichnet, dass** der Verjüngungsabschnitt (204, 205, 427, 447, 532, 602, 704 708) eine Befestigungsausnehmung (240, 241, 432, 462) aufweist, die sich von einem ersten Ende zu einem zweiten Ende erstreckt.

2. Rotor (106) für eine Windenergieanlage (100), umfassend
- mindestens ein Rotorblatt (108, 400, 400') gemäß dem vorhergehenden Anspruch,
- eine Nabe mit einem Blattbefestigungselement (300, 630), das an seiner Rotorblattseite ein Sackloch (330, 340, 640, 642) zur Aufnahme eines Längsbolzens (220, 221, 420, 440, 510, 512, 610, 614, 712) zur Befestigung eines Rotorblatts an dem Blattbefestigungselement aufweist,
- wobei ein Längsbolzen (220, 221, 420, 440, 510, 512, 610, 614, 712) in dem Sackloch und in der Längsbolzenausnehmung zur Befestigung des Rotorblatts an dem Blattbefestigungselement angeordnet ist.

3. Rotor (106) gemäß dem vorhergehenden Anspruch, wobei eine Flächennormale eines Öffnungsquerschnitts eines zweiten Endes der Befestigungsausnehmung (240, 241, 432, 462) und eine Flächennormale eines Öffnungsquerschnitts eines ersten Endes der Befestigungsausnehmung (240, 241, 432, 462) einen Winkel einschließen und/oder eine Flächennormale eines Öffnungsquerschnitts eines zweiten Endes der Befestigungsausnehmung (240, 241, 432, 462) und eine Längsachse der Befestigungsausnehmung (240, 241, 432, 462) einen Winkel einschließen.

4. Rotor (106) gemäß mindestens einem der beiden vorhergehenden Ansprüche, wobei ein Durchmesser der Befestigungsausnehmung (240, 241, 432, 462) größer ist als ein Durchmesser der Längsbolzenausnehmung.

5. Rotor (106) gemäß mindestens einem der vorhergehenden Ansprüche 2-4, wobei die Befestigungsausnehmung (240, 241, 432, 462), insbesondere ein Durchmesser der Befestigungsausnehmung, angeordnet und ausgebildet ist zur Aufnahme eines Gegenstücks (426, 446, 242, 243, 612, 616, 714), insbesondere einer Mutter, zur Verbindung mit dem Längsbolzen (220, 221, 420, 440, 510, 512, 610, 614, 712).

6. Rotor (106) gemäß mindestens einem der vorhergehenden Ansprüche 2-5, wobei der Verdickungsabschnitt (202, 203, 425, 445, 530, 604, 702, 706) und vorzugsweise der Verjüngungsabschnitt (204, 205, 427, 447, 532, 602, 704 708) ringförmig ausgebildet ist bzw. sind.

7. Rotor (106) gemäß mindestens einem der vorhergehenden Ansprüche 2-6, wobei das Blattbefestigungselement (300, 630) an einer der Rotorblattseite abgewandten Lagerseite eine Lagernut (350) aufweist mit einer Nutbreite, einer Nutbodenfläche, einer äußeren Nutseitenfläche und einer inneren Nutseitenfläche sowie einer Nutöffnung.

8. Rotor (106) gemäß dem vorhergehenden Anspruch, wobei
- der Nutboden von einem Sacklochboden in axialer Richtung beabstandet ist, und/oder
- ein radialer Abstand zwischen der äußeren Nutseitenfläche und einer Sacklochachse kleiner ist als ein zweifacher Sacklochdurchmesser, und/oder
- ein radialer Abstand zwischen der inneren Nutseitenfläche und einer Sacklochachse kleiner ist als ein zweifacher Sacklochdurchmesser, und/oder
- eine Sachlocklängsachse den Nutboden schneidet.

9. Rotor (106) gemäß mindestens einem der vorhergehenden Ansprüche 2-8, wobei
- das Rotorblatt (108, 400, 400') im Befestigungsbereich (200, 410, 500, 600, 700) eine sich im Wesentlichen radial zu einer Durchtrittsrichtung des Befestigungsbereichs erstreckende Querbolzenausnehmung (450, 522) aufweist,
- in der Querbolzenausnehmung ein Querbolzen (212, 430, 520, 620, 710) mit einer Querbolzenöffnung (214, 215) angeordnet ist,
- die Querbolzenöffnung einen Teil der Längsbolzenausnehmung (210, 211, 428, 448, 502, 504) bildet und sich der Längsbolzen (220, 221, 420, 440, 510, 512, 610, 614, 712) durch die Querbolzenöffnung erstreckt.

10. Rotor (106) gemäß mindestens einem der vorhergehenden Ansprüche 2-9, wobei
- das Blattbefestigungselement (300, 630) ein Nabenadapter und/oder ein Blattflanschlager ist.

11. Rotorblattsegment für ein Rotorblatt für eine Windenergieanlage (100), das sich von einem Blattende zu einer Befestigungsseite erstreckt, umfassend einen Befestigungsbereich, der rohrförmig ausgebildet und an die Befestigungsseite angrenzend angeordnet ist, zur Befestigung des Rotorblattsegments an einem weiteren Rotorblattsegment zur Bildung eines Rotorblatts wobei
- an einer Außenumfangsfläche und/oder an einer Innenumfangfläche des Befestigungsbereiches mindestens ein Verdickungsabschnitt angeordnet ist,
- sich durch den mindestens einen Verdickungsabschnitt eine als Durchgangsöffnung ausgebildete Längsbolzenausnehmung mit zwei gegenüberliegenden Enden erstreckt, wobei ein erstes Ende an der Befestigungsseite angeordnet ist,
- **dadurch gekennzeichnet, dass** der Befestigungsbereich (200, 410, 500, 600, 700) auf einer stirnseitenabgewandten Seite des Verdickungsabschnitts (202, 203, 425, 445, 530, 604, 702, 706) einen Verjüngungsabschnitt (204, 205, 427, 447, 532, 602, 704 708) aufweist, wobei sich der Verjüngungsabschnitt von einem stirnseitenzugewandten Ende zu einem stirnseitenabgewandten Ende hin verjüngt, und
- **dadurch gekennzeichnet, dass** der Verjüngungsabschnitt (204, 205, 427, 447, 532, 602, 704 708) eine Befestigungsausnehmung (240, 241, 432, 462) aufweist, die sich von einem ersten Ende zu einem zweiten Ende erstreckt.

12. Windenergieanlage (100) umfassend einen Rotor (106) gemäß mindestens einem der Ansprüche 2-10 und/oder ein Rotorblatt (108, 400, 400') gemäß dem vorhergehenden Anspruch 1.

13. Verfahren zur Montage eines Rotors gemäß mindestens einem der Ansprüche 2-10, und/oder zur Befestigung eines Rotorblatts (108, 400, 400') gemäß Anspruch 1 an einem Blattbefestigungselement (300, 630) , umfassend
- Bereitstellen eines Rotorblatts (108, 400, 400') gemäß Anspruch 1,
- Bereitstellen eines Blattbefestigungselements umfassend ein Sackloch (330, 340, 640, 642) zur Aufnahme eines Längsbolzens (220, 221, 420, 440, 510, 512, 610, 614, 712) zur Befestigung eines Rotorblatts (108, 400, 400') an dem Blattbefestigungselement (300, 630), insbesondere eines Rotorblatts gemäß Anspruch 1, wobei das Blattbefestigungselement an einer der Rotorblattseite abgewandten Lagerseite eine Lagernut (350) aufweist mit einer Nutbreite, einer Nutbodenfläche, einer äußeren Nutseitenfläche und einer inneren Nutseitenfläche sowie einer Nutöffnung,
- Befestigen eines Längsbolzens (220, 221, 420, 440, 510, 512, 610, 614, 712) in dem Sackloch (330, 340, 640, 642) des Blattbefestigungselements, insbesondere mittels Einschrauben,
- Durchführen des aus dem Sackloch (330, 340, 640, 642) ragenden Abschnitts des Längsbolzens (220, 221, 420, 440, 510, 512, 610, 614, 712) durch die Längsbolzenausnehmung (210, 211, 428, 448, 502, 504), wobei die Stirnseite (108b, 501) des Rotorblatts zumindest abschnittsweise an einer Rotorblattseite des Blattbefestigungselements anliegt,
- Befestigung eines aus der Längsbolzenausnehmung ragenden Endes des Längsbolzens im Bereich des Befestigungsabschnitts, vorzugsweise durch Anbringen eines Gegenstücks.

## Claims

1. A rotor blade (108, 400, 400') for a wind turbine (100), which extends from a blade tip (108a) to a face side (108b, 501), comprising a fastening region (200, 410, 500, 600, 700) which is of tubular form and which is arranged adjoining the face side and which serves for the fastening of the rotor blade to a blade-fastening element (300, 630) of a rotor hub, wherein
- at least one thickened portion (202, 203, 425, 445, 530, 604, 702, 706) is arranged at an outer circumferential surface and/or at an inner circumferential surface of the fastening region,
- the at least one thickened portion is extended through by a longitudinal bolt cutout (210, 211, 428, 448, 502, 504), in the form of a passage opening, with two opposite ends, wherein a first end is arranged on the face side,
- **characterized in that** the fastening region (200, 410, 500, 600, 700) has a tapering portion (204, 205, 427, 447, 532, 602, 704, 708) on a face side-averted side of the thickened portion (202, 203, 425, 445, 530, 604, 702, 706), wherein the tapering portion tapers from a face side-facing end to a face side-averted end, and
- **characterized in that** the tapering portion (204, 205, 427, 447, 532, 602, 704, 708) has a fastening cutout (240, 241, 432, 462) which extends from a first end to a second end.

2. A rotor (106) for a wind turbine (100), comprising
- at least one rotor blade (108, 400, 400') as claimed in the preceding claim,
- a hub having a blade-fastening element (300, 630) which, at the rotor-blade side thereof, has a blind hole (330, 340, 640, 642) for receiving a longitudinal bolt (220, 221, 420, 440, 510, 512, 610, 614, 712) for the fastening of a rotor blade to the blade-fastening element,
- wherein a longitudinal bolt (220, 221, 420, 440, 510, 512, 610, 614, 712) is arranged in the blind hole and in the longitudinal bolt cutout for the fastening of the rotor blade to the blade-fastening element.

3. The rotor (106) as claimed in the preceding claim, wherein a surface normal of an opening cross section of a second end of the fastening cutout (240, 241, 432, 462) and a surface normal of an opening cross section of a first end of the fastening cutout (240, 241, 432, 462) include an angle, and/or a surface normal of an opening cross section of a second end of the fastening cutout (240, 241, 432, 462) and a longitudinal axis of the fastening cutout (240, 241, 432, 462) include an angle.

4. The rotor (106) as claimed in at least one of the two preceding claims, wherein a diameter of the fastening cutout (240, 241, 432, 462) is greater than a diameter of the longitudinal bolt cutout.

5. The rotor (106) as claimed in at least one of the preceding claims 2-4, wherein the fastening cutout (240, 241, 432, 462), in particular a diameter of the fastening cutout, is arranged and configured for receiving a counterpart (426, 446, 242, 243, 612, 616, 714), in particular a nut, for connection to the longitudinal bolt (220, 221, 420, 440, 510, 512, 610, 614, 712).

6. The rotor (106) as claimed in at least one of the preceding claims 2-5, wherein the thickened portion (202, 203, 425, 445, 530, 604, 702, 706) and preferably the tapering portion (204, 205, 427, 447, 532, 602, 704 708) is/are of annular form.

7. The rotor (106) as claimed in at least one of the preceding claims 2-6, wherein, on a bearing side, which is averted from the rotor-blade side, the blade-fastening element (300, 630) has a bearing groove (350) with a groove width, with a groove base surface, with an outer groove side surface and inner groove side surface and with a groove opening.

8. The rotor (106) as claimed in the preceding claim, wherein
- the groove base is spaced apart from a blind hole base in an axial direction, and/or
- a radial spacing between the outer groove side surface and a blind hole axis is smaller than twice the blind hole diameter, and/or
- a radial spacing between the inner groove side surface and a blind hole axis is smaller than twice the blind hole diameter, and/or
- a blind hole longitudinal axis intersects the groove base.

9. The rotor (106) as claimed in at least one of the preceding claims 2-8, wherein
- the rotor blade (108, 400, 400') has in the fastening region (200, 410, 500, 600, 700) a transverse bolt cutout (450, 522) which extends substantially radially with respect to a passage direction of the fastening region,
- a transverse bolt (212, 430, 520, 620, 710) with a transverse bolt opening (214, 215) is arranged in the transverse bolt cutout,
- the transverse bolt opening forms a part of the longitudinal bolt cutout (210, 211, 428, 448, 502, 504), and the longitudinal bolt (220, 221, 420, 440, 510, 512, 610, 614, 712) extends through the transverse bolt opening.

10. The rotor (106) as claimed in at least one of the preceding claims 2-9, wherein
- the blade-fastening element (300, 630) is a hub adapter and/or a blade flange bearing.

11. A rotor blade segment for a rotor blade for a wind turbine (100), which rotor blade segment extends from a blade end to a fastening side, comprising a fastening region which is of tubular form and which is arranged adjoining the fastening side and which serves for the fastening of the rotor blade segment to a further rotor blade segment for the purpose of forming a rotor blade, wherein
- at least one thickened portion is arranged at an outer circumferential surface and/or at an inner circumferential surface of the fastening region,
- the at least one thickened portion is extended through by a longitudinal bolt cutout, in the form of a passage opening, with two opposite ends, wherein a first end is arranged at the fastening side
- **characterized in that** the fastening region (200, 410, 500, 600, 700) has a tapering portion (204, 205, 427, 447, 532, 602, 704, 708) on a face side-averted side of the thickened portion (202, 203, 425, 445, 530, 604, 702, 706), wherein the tapering portion tapers from a face side-facing end to a face side-averted end, and
- **characterized in that** the tapering portion (204, 205, 427, 447, 532, 602, 704, 708) has a fastening cutout (240, 241, 432, 462) which extends from a first end to a second end.

12. A wind turbine (100) comprising a rotor (106) as claimed in at least one of claims 2-10 and/or a rotor blade (108, 400, 400') as claimed in the preceding claim 1.

13. A method for mounting a rotor as claimed in at least one of claims 2-10, and/or for fastening a rotor blade (108, 400, 400') as claimed in claim 1 to a blade-fastening element (300, 630), comprising
- providing a rotor blade (108, 400, 400') as claimed in claim 1,
- providing a blade-fastening element, comprising a blind hole (330, 340, 640, 642) for receiving a longitudinal bolt (220, 221, 420, 440, 510, 512, 610, 614, 712) for the fastening of a rotor blade (108, 400, 400') to the blade-fastening element (300, 630), in particular a rotor blade as claimed in claim 1, wherein on a bearing side, which is averted from the rotor-blade side, the blade-fastening element has a bearing groove (350) with a groove width, with a groove base surface, with an outer groove side surface and inner groove side surface and with a groove opening.- fastening a longitudinal bolt (220, 221, 420, 440, 510, 512, 610, 614, 712) in the blind hole (330, 340, 640, 642) of the blade-fastening element, in particular by means of screwing-in,
- leading that portion of the longitudinal bolt (220, 221, 420, 440, 510, 512, 610, 614, 712) which projects from the blind hole (330, 340, 640, 642) through the longitudinal bolt cutout (210, 211, 428, 448, 502, 504), wherein the face side (108b, 501) of the rotor blade at least sectionally abuts against a rotor-blade side of the blade-fastening element,
- fastening in the region of the fastening cutout, preferably through attachment of a counterpart, an end of the longitudinal bolt that projects from the longitudinal bolt cutout.

## Revendications

1. Pale de rotor (108, 400, 400') pour une éolienne (100), qui s'étend d'une pointe de pale (108a) à une face frontale (108b, 501), comprenant une zone de fixation (200, 410, 500, 600, 700), qui est réalisée avec une forme tubulaire et est disposée de manière adjacente à la face frontale, pour la fixation de la pale de rotor sur un élément de fixation de pale (300, 630) d'un moyeu de rotor, dans laquelle
- au moins une section d'épaississement (202, 203, 425, 445, 530, 604, 702, 706) est disposée sur une surface périphérique extérieure et/ou sur une surface périphérique intérieure de la zone de fixation,
- un évidement de boulon longitudinal (210, 211, 428, 448, 502, 504) avec deux extrémités opposées, réalisé comme une ouverture de passage, s'étend à travers l'au moins une section d'épaississement, dans laquelle une première extrémité est disposée sur la face frontale,
- **caractérisée en ce que** la zone de fixation (200, 410, 500, 600, 700) présente, sur un côté opposé à la face frontale de la section d'épaississement (202, 203, 425, 445, 530, 604, 702, 706), une section de rétrécissement (204, 205, 427, 447, 532, 602, 704, 708), dans laquelle la section de rétrécissement se rétrécit depuis une extrémité tournée vers la face frontale à une extrémité opposée à la face frontale, et
- **caractérisée en ce que** la section de rétrécissement (204, 205, 427, 447, 532, 602, 704, 708) présente un évidement de fixation (240, 241, 432, 462) qui s'étend depuis une première extrémité à une deuxième extrémité.

2. Rotor (106) pour une éolienne (100), comprenant
- au moins une pale de rotor (108, 400, 400') selon la revendication précédente,
- un moyeu avec un élément de fixation de pale (300, 630) qui présente, sur son côté de pale de rotor, un trou borgne (330, 340, 640, 642) pour la réception d'un boulon longitudinal (220, 221, 420, 440, 510, 512, 610, 614, 712) pour fixer une pale de rotor sur l'élément de fixation de pale,
- dans lequel un boulon longitudinal (220, 221, 420, 440, 510, 512, 610, 614, 712) est disposé dans le trou borgne et dans l'évidement de boulon longitudinal pour fixer la pale de rotor sur l'élément de fixation de pale.

3. Rotor (106) selon la revendication précédente, dans lequel la normale de surface d'une section transversale d'ouverture d'une deuxième extrémité de l'évidement de fixation (240, 241, 432, 462) et une normale de surface d'une section transversale d'ouverture d'une première extrémité de l'évidement de fixation (240, 241, 432, 462) forment un angle et/ou une normale de surface d'une section transversale d'ouverture d'une deuxième extrémité de l'évidement de fixation (240, 241, 432, 462) et un axe longitudinal de l'évidement de fixation (240, 241, 432, 462) forment également un angle.

4. Rotor (106) selon au moins l'une quelconque des deux revendications précédentes, dans lequel un diamètre de l'évidement de fixation (240, 241, 432, 462) est supérieur à un diamètre de l'évidement de boulon longitudinal.

5. Rotor (106) selon au moins l'une quelconque des revendications précédentes 2 à 4, dans lequel l'évidement de fixation (240, 241, 432, 462), en particulier un diamètre de l'évidement de fixation, est disposé et réalisé pour recevoir une contre-pièce (426, 446, 242, 243, 612, 616, 714), en particulier un écrou, pour la liaison au boulon longitudinal (220, 221, 420, 440, 510, 512, 610, 614, 712).

6. Rotor (106) selon au moins l'une quelconque des revendications précédentes 2 à 5, dans lequel la section d'épaississement (202, 203, 425, 445, 530, 604, 702, 706) et de préférence la section de rétrécissement (204, 205, 427, 447, 532, 602, 704, 708) est réalisée ou sont réalisées avec une forme annulaire.

7. Rotor (106) selon au moins l'une quelconque des revendications précédentes 2 à 6, dans lequel l'élément de fixation de pale (300, 630) présente une rainure de palier (350) sur un côté de palier opposé au côté de pale du rotor, avec une largeur de rainure, une surface de fond de rainure, une surface latérale de rainure extérieure et une surface latérale de rainure intérieure, ainsi qu'une ouverture de rainure.

8. Rotor (106) selon la revendication précédente, dans lequel
- le fond de rainure est éloigné d'un fond de trou borgne dans la direction axiale, et/ou
- une distance radiale entre la surface latérale de rainure extérieure et un axe de trou borgne est inférieure à deux fois le diamètre d'un trou borgne, et/ou
- une distance radiale entre la surface latérale de rainure intérieure et un axe de trou borgne est inférieure à deux fois le diamètre d'un trou borgne, et/ou
- un axe longitudinal de trou borgne coupe le fond de la rainure.

9. Rotor (106) selon au moins l'une quelconque des revendications 2 à 8 précédentes, dans lequel
- la pale de rotor (108, 400, 400') présente, dans la zone de fixation (200, 410, 500, 600, 700), un évidement (450, 522) de boulon transversal s'étendant sensiblement de manière radiale vers une direction de passage de la zone de fixation,
- un boulon transversal (212, 430, 520, 620, 710) avec une ouverture de boulon transversale (214, 215) est disposé dans l'évidement de boulon transversal,
- l'ouverture de boulon transversal constitue une partie de l'évidement de boulon longitudinal (210, 211, 428, 448, 502, 504) et le boulon longitudinal (220, 221, 420, 440, 510, 512, 610, 614, 712) s'étend à travers l'ouverture de boulon transversal.

10. Rotor (106) selon au moins l'une quelconque des revendications 2 à 9 précédentes, dans lequel
- l'élément de fixation de pale (300, 630) est un adaptateur de moyeu et/ou un palier de bride de pale.

11. Segment de pale de rotor pour une pale de rotor d'une éolienne (100), qui s'étend depuis une extrémité de pale à un côté de fixation, comprenant une zone de fixation, qui est réalisée avec une forme tubulaire et est disposée de manière adjacente au côté de fixation, pour la fixation du segment de pale de rotor à un autre segment de pale de rotor pour former une pale de rotor, dans lequel
- au moins une section d'épaississement est disposée sur une surface périphérique extérieure et/ou sur une surface périphérique intérieure de la zone de fixation,
- un évidement de boulon longitudinal réalisé en tant qu'ouverture de passage avec deux extrémités opposées s'étend à travers l'au moins une section d'épaississement, dans lequel une première extrémité est disposée sur le côté de fixation,
- **caractérisé en ce que** la zone de fixation (200, 410, 500, 600, 700) présente, sur un côté opposé à la face frontale de la section d'épaississement (202, 203, 425, 445, 530, 604, 702, 706), une section de rétrécissement (204, 205, 427, 447, 532, 602, 704, 708), dans lequel la section de rétrécissement se rétrécit depuis une extrémité tournée vers la face frontale à une extrémité opposée à la face frontale, et
- **caractérisé en ce que** la section de rétrécissement (204, 205, 427, 447, 532, 602, 704, 708) présente un évidement de fixation (240, 241, 432, 462) qui s'étend depuis une première extrémité à une deuxième extrémité.

12. Éolienne (100) comprenant un rotor (106) selon au moins l'une quelconque des revendications 2 à 10 et/ou une pale de rotor (108, 400, 400') selon la revendication précédente 1.

13. Procédé de montage d'un rotor selon au moins l'une quelconque des revendications 2 à 10, et/ou pour la fixation d'une pale de rotor (108, 400, 400') selon la revendication 1 sur un élément de fixation de pale (300, 630), comprenant
- la mise à disposition d'une pale de rotor (108, 400, 400') selon la revendication 1,
- la mise à disposition d'un élément de fixation de pale comprenant un trou borgne (330, 340, 640, 642) pour recevoir un boulon longitudinal (220, 221, 420, 440, 510, 512, 610, 614, 712) pour fixer une pale de rotor (108, 400, 400') sur l'élément de fixation de pale (300, 630), en particulier une pale de rotor selon la revendication 1, dans lequel l'élément de fixation de pale présente, sur un côté de palier opposé au côté de pale de rotor, une rainure de palier (350) avec une largeur de rainure, une surface de fond de rainure, une surface latérale de rainure extérieure et une surface latérale de rainure intérieure ainsi qu'une ouverture de rainure,
- la fixation d'un axe longitudinal (220, 221, 420, 440, 510, 512, 610, 614, 712) dans le trou borgne (330, 340, 640, 642) de l'élément de fixation de pale, en particulier par vissage,
- le passage de la section du boulon longitudinal (220, 221, 420, 440, 510, 512, 610, 614, 712), dépassant du trou borgne (330, 340, 640, 642), à travers l'évidement de boulon longitudinal (210, 211, 428, 448, 502, 504), dans lequel la face avant (108b, 501) de la pale de rotor repose au moins par sections sur un côté de pale de rotor de l'élément de fixation de pale,
- la fixation d'une extrémité du boulon longitudinal, dépassant de l'évidement de boulon longitudinal, dans la zone de la section de fixation, de préférence par l'installation d'une contre-pièce.
